# EUROPEAN PATENT APPLICATION

(11) **EP 4 840 529 A2**
(43) Date of publication of application: **18.11.2026**
(21) Application number: 26209159.8
(22) Date of filing: 07.11.2023
(51) Int. Cl.: B01D 53/00

(54) **APPARATUS AND PROCESS FOR STEAM REFORMING**

(30) Priority: 19.07.2023 US 202363527810 P; 31.10.2023 US 202318498480
(62) Document number(s) of the earlier application(s) in accordance with Art. 76 EPC: 23814005.7 / 4 747 188
(71) Applicant: Air Products and Chemicals, Inc., Allentown, PA 18106 (US)
(72) Inventor: THAKKAR, Jay A., 18103 Allentown (US); BERGER, Alan D., 19002 Ambler (US); GENKIN, Eugene S., 18104 Allentown (US); GRAHAM, David Ross, 19438 Harleysville (US); HIGGINBOTHAM, Paul, GU1 2SY Guildford (GB)
(74) Representative: Beck Greener LLP

(57) **Abstract**

An apparatus and process for steam reforming can be configured to produce at least one product with reduced carbon dioxide and/or nitrogen oxide emissions. Some embodiments can be better adapted for retrofitting a pre-existing steam reforming process while other embodiments can be better adapted for use in a newly constructed facility. Embodiments can be configured to utilize a synthetic air oxidant to provide combustion that results in formation of a flue gas having relatively high carbon dioxide concentrations that may also have low nitrogen and low nitrogen oxide concentrations. A control system can be configured for utilization in such embodiments to control the steam reforming process and/or oxidant formation process as well. Some embodiments can also be configured to provide carbon dioxide recovery that can permit recovery of a second product stream comprised of carbon dioxide.

## Description

### CROSS-REFERENCE TO RELATED APPLICATIONS

The present application claims priority to U.S. Non-Provisional Application No. 18/498,480 filed October 31, 2023 and U.S. Provisional Patent Application No. 63/527,810, filed on July 19, 2023.

### FIELD

The present innovation relates to processes and apparatuses for steam reforming (e.g. a steam-methane reformer (SMR), steam reformer, steam reforming processes, etc.). For example, some embodiments can be configured for forming and using synthetic air as an oxidant for combustion of a fuel for steam reforming or steam methane reforming that can produce hydrogen gas while also facilitating improved carbon dioxide recovery.

### BACKGROUND

Steam reforming or steam methane reforming can be considered use of a reformer feedstock to form synthesis gas by reaction with steam (e.g., a reaction between feedstock and steam over a catalyst to form a synthesis gas). Hydrogen gas can be produced from utilization of a stream reforming process (e.g., a steam methane reforming process), for example. U.S. Patent Nos. 7,591,992, 7,850,944, 8,496,908 and 9,458,013, U.S. Patent Application Publication Nos. 2021/0071861 and 2014/0124705, and International Publication No. WO 2022/131925 disclose different types of steam reforming processes and steam reforming systems.

### SUMMARY

We have recognized that a typical steam methane reformer utilizes air as oxidant gas for fuel combustion. We also recognized that using air as an oxidant for combustion in steam reforming devices and processes can generate flue gas streams with dilute concentrations of carbon dioxide (CO2 or CO₂). Consequently, recovery of CO2 from these streams can require significant energy and utility penalties, which can make the CO2 recovery process extremely expensive.

We have determined that CO2 recovery can be greatly improved upon for a steam reforming processes (e.g. steam methane reforming, etc.) that can permit improved CO2 recovery while also reducing the costs associated with CO2 recovery and also substantially reducing environmental impacts associated with such processing (e.g. limiting CO2 emissions). Some embodiments can be configured as a blue hydrogen production system or process, for example, that can permit improved hydrogen production to occur while also providing an additional CO2 product stream from CO2 recovery that can have the additional benefits of reducing greenhouse gas emissions and costs associated with operation of by limiting or avoiding emissions of CO2.

Embodiments of our process and apparatus can be configured to form a synthetic air for use as an oxidant instead of using air or oxygen enriched air. Such embodiments can form a synthetic air that has a relatively low amount of nitrogen while also having a suitable concentration of oxygen (e.g. between 20 mole percent (mol%) oxygen (O2) and 40 mol% O2, between 20 mole percent (mol%) oxygen (O2) and 35 mol% O2, between 20 mol% O2 and 30 mol% O2, between 20 mol% O2 and 28 mol% O2, etc.) and a significant concentration of CO2 (e.g. between 45 mol% CO2 and 70 mol% CO2, between 20 mol% CO2 and 60 mol% CO2, etc.). The formed synthetic air oxidant can have a relatively high concentration of CO2 via injection of oxygen into a flue gas stream that has a relatively high concentration of CO2. The flue gas stream can be flue gas recycled from combustion of methane or other fuel in a combustion chamber of a steam reformer device or can be flue gas from another process gas that may be fed to a mixing device for having the oxygen injected therein for forming the synthetic air oxidant.

For example, the CO2 content of the formed synthetic air can be between 20 mol% and 80 mol% or between 20 mol% and 60 mol%. Water (H2O) can also be included in the formed synthetic air to help inhibit NOx formation from combustion of fuel (e.g. methane, etc.) as well. The water can be between 2 mol% and 40 mol% of the synthetic air in some embodiments. In other embodiments, water may not be present or may only be present in a relatively trace amount (e.g. water can be between 0 mol% and 5 mol% of the synthetic air).

In some embodiments, the synthetic air that can be used as the oxidant can be formed so that there is a pre-selected ratio of water to CO2 (water/CO2). This pre-selected ratio can be 0.8, between 0 and 1.1, or between 0.6 and 0.9 in some embodiments. Other embodiments can also utilize another suitable ratio that may be configured to meet a particular set of design criteria.

The water included in the synthetic air can include water in flue gas. In some embodiments, the water can also be provided by injecting water from a source of water into the flue gas via a mixing device or a water injection mechanism positioned downstream of the mixing device that can be configured for injection of oxygen into the flue gas to form the synthetic air oxidant. For example, water injection can occur after the formed oxidant is pre-heated and before it is fed into a combustion chamber.

The formed synthetic air can have a relatively low amount of nitrogen therein that is much lower than the nitrogen content in air or oxygen enriched air. For example, the formed synthetic air can include between 20 mol% oxygen (O2) and 40 mol% O2, between 0 mol% argon (Ar) and 3 mol% Ar, between 2 mol% nitrogen (N2) and 20 mol% N2, between 5 mol% water and 40 mol% water, and between 20 mol% carbon dioxide (CO2) and 70 mol% CO2. The formed synthetic air can also include other constituents such as small amounts of carbon monoxide (CO) and helium (He), for example.

For instance, a mixing device used for injection of oxygen into a flue gas to form the synthetic air oxidant can be configured for formation of synthetic air that can include 30 mol% to 60 mol% CO2, 23 mol% to 28 mol% O2, 1 mol% Ar to 2 mol% Ar, 5 mol% N2 to 15 mol% N2, and 5 mol% water to 40 mol% water. As another example, the mixing device used for injection of oxygen into a flue gas to form the synthetic air oxidant can be configured for formation of synthetic air that can include 20 mol% to 70 mol% CO2, 22 mol% to 35 mol% O2, 1 mol% Ar to 2 mol% Ar, 5 mol% N2 to 15 mol% N2, and 2 mol% water to 40 mol% water.

As yet another example, the mixing device can be configured for formation of synthetic air that can include less than 15 mol% N2 or less than 10 mol% N2. Preferably, the N2 concentration in the formed synthetic air is minimized or otherwise kept relatively low (e.g. below 20 mol% or below 15 mol%). We have found that use of low levels of N2 can help limit or avoid formation of nitrogen oxides (NOx), which can help further reduce the environmental impact associated with operation or implementation.

Embodiments can also utilize control schemes for controlling the formation of a low N2 synthetic air oxidant and recovery of CO2 that can be provided via implementation of a hydrogen production process via a steam reforming apparatus. Control schemes can be implemented by an automated process control system or a distributed control system (DCS), for example. Embodiments can utilize at least one controller communicatively connected to at least one sensor for controlling at least one operational parameter of at least one unit (rotational speed of a booster fan or induction fan, positioning of at least one control valve or damper, and/or rates at which one or more gases are fed to the mixing device to form the oxidant, etc.). Embodiments can provide improved operational flexibility and consistency for implementation. Embodiments of the control scheme can be adapted so that combustion and/or reformation can be initiated or started up using a first type of oxidant (e.g. air or oxygen enriched air) and that the processing can subsequently be switched so that synthetic air is utilized as the oxidant and air or oxygen enriched air is no longer utilized. Other embodiments can be adapted so that only synthetic air is utilized as an oxidant for processing.

Embodiments of our process and apparatus can also be utilized in retrofit operations to retrofit a pre-existing steam reformer plant to utilize synthetic air and carbon capture devices or systems, for example. Other embodiments can be incorporated in new plant designed for CO2 capture that can permit reducing the carbon footprint for hydrogen (H2) production. Yet other embodiments can be incorporated into new plants or for retrofitting plants to facilitate reduced CO2 emissions and/or generation of a CO2 product stream that also permits production of at least one other product from a formed synthesis gas via a steam reforming process.

In a first aspect, an apparatus for steam reforming can include a combustion device configured to combust a fuel with an oxidant in a combustion chamber of the combustion device to form flue gas and heat at least one reactant stream passed through the combustion device to form at least one reformate stream for production of hydrogen. A mixing device can be positioned to receive a mixing device portion of the flue gas from the combustion device to mix with oxygen from at least one source of oxygen to form the oxidant such that the oxidant comprises between 20 mole percent (mol%) oxygen (O2) and 40 mol% O2, between 20 mol% carbon dioxide (CO2) and 80 mol% CO2, between 0 mol% nitrogen (N2) and 25 mol% N2, and between 0 mol% water and 40 mol% water. A carbon capture system can be positioned to receive a carbon capture portion of the flue gas from the combustion device to recover CO2 and form at least one CO2 product stream.

In some embodiments, the CO2 product stream can be fed to a CO2 pipeline or a storage device for storage of CO2 for subsequent use and/or transport. In other embodiments, the CO2 product stream can be utilized for sequestration of the CO2. In yet other embodiments, the CO2 product stream can be fed to another process unit of a plant.

In a second aspect, the apparatus for steam reforming can include at least one particulate removal device positioned to remove particulates from the carbon capture portion of the flue gas upstream of a feed compression system of the carbon capture system. In some embodiments, a first particulate removal device can be positioned upstream of a cooler unit positioned to cool the carbon capture portion of the flue gas before the flue gas is fed to a feed compression system of the carbon capture system. A second particulate removal device can optionally be positioned between the feed compression system and the cooler unit as well. In other embodiments, a first particulate removal device can be positioned between the feed compression system and the cooler unit.

In a third aspect, the carbon capture system can be configured to output an oxidant forming feed stream to feed to the mixing device to mix with the mixing device portion of the flue gas and the oxygen to form the oxidant.

In a fourth aspect, the carbon capture portion of the flue gas can be a first portion of the flue gas and the mixing device portion of the flue gas can include a second portion of the flue gas. The mixing device portion of the flue gas can be between 30% and 90% of the flue gas and the first portion of the flue gas can be a remainder of the flue gas.

In a fifth aspect, the mixing device and the carbon capture system can be positioned such that the second portion of the flue gas is split from the first portion of the flue gas upstream of a cooler unit positioned between a location at which the second portion of the flue gas is split from the first portion of the flue gas and the cooler unit. A feed compression system of the carbon capture system can be positioned to receive the first portion of the flue gas as the carbon capture portion of the flue gas from the cooler unit.

In some embodiments, the mixing device can be positioned so that a third portion of the flue gas is splittable from the first portion of the flue gas upstream of the feed compression system and downstream of the cooler unit for feeding the third portion of the flue gas to the mixing device. For example, the mixing device can be positioned such that the second portion of the flue gas is mixed with the third portion of the flue gas to form the mixing device portion of the flue gas for feeding to the mixing device to form the oxidant in some embodiments.

In some embodiments, the amount of flue gas within the third portion of the flue gas can be adjustable to form the mixing device portion of the flue gas to adjust a temperature of the mixing device portion of the flue gas. For example, the portion of the first portion of the flue gas split to form the third portion of the flue gas can be adjustable for adjusting a temperature of the second portion of the flue gas for forming the mixing device portion of the flue gas so that the mixing device portion of the flue gas has a desired temperature or has a temperature within a pre-selected range of temperatures.

In a sixth aspect, the apparatus for steam reforming can include a hydrogen production system positioned to receive the at least one reformate stream to form at least one hydrogen-rich product stream. The hydrogen production system can have a carbon capture unit positioned upstream of a hydrogen recovery unit. The hydrogen recovery unit can be configured to form the at least one hydrogen-rich product stream.

The carbon capture unit of the hydrogen production system can be configured to recover CO2 from the at least one reformate stream received by the hydrogen production system and output at least one CO2 recovery stream. For example, the carbon capture unit of the hydrogen production system can be positioned and configured to output the at least one CO2 recovery stream so that one or more of: (i) a portion of the at least one CO2 recovery stream is feedable to the mixing device to form the oxidant, (ii) a portion of the at least one CO2 recovery stream is feedable to a compression system to form a CO2 product stream, and/or (iii) a portion of the at least one CO2 recovery stream is feedable to a tail gas stream outputtable from the hydrogen recovery unit for being mixed therewith and fed to the combustion chamber of the combustion device.

In a seventh aspect, the at least one CO2 product stream can include a first CO2 product stream and the carbon capture system can include a partial condensation unit positioned to receive compressed flue gas from a compression system of the carbon capture system (e.g. a feed compression system of the carbon capture system) and output a first CO2-rich stream and a second CO2-rich stream. The first CO2-rich stream can be outputtable at a pressure that is higher than a pressure of the second CO2-rich stream. The second CO2-rich stream can be feedable to a first stage of a CO2 product stream compression system for forming the first CO2 product stream and the first CO2-rich stream can be feedable to a second stage of the CO2 product stream compression system for forming the first CO2 product stream. The first CO2 product stream can have a pre-selected CO2 content. For instance, the CO2 product stream can have a CO2 content of between 90 mole percent (mol%) CO2 and 100 mol% CO2.

In an eighth aspect, the apparatus for steam reforming can include other features. For example, the apparatus for steam reforming of the first aspect can include one or more features of the second aspect, third aspect, fourth aspect, fifth aspect, sixth aspect and/or seventh aspect. It should therefore be understood that other embodiments can utilize other features or other combinations of features. Examples of such combinations of features can be appreciated from the exemplary embodiments discussed herein.

For example, a steam reformer apparatus can include a combustion device configured to combust a fuel with an oxidant in a combustion chamber of the combustion device to form flue gas and heat at least one reactant stream passed through the combustion device to form at least one reformate stream for production of hydrogen. A mixing device can be positioned to receive a mixing device portion of the flue gas from the combustion device to mix with oxygen from at least one source of oxygen to form the oxidant such that the oxidant comprises between 20 mol% O2 and 40 mol% O2, between 20 mol% CO2 and 80 mol% CO2, and between 0 mol% N2 and 25 mol% N2. A carbon capture system can be positioned to receive a carbon capture portion of the flue gas from the combustion device to recover CO2 and form at least one CO2 product stream. The carbon capture system can include at least one particulate removal device positioned upstream of a feed compression system and a membrane unit positioned downstream of the feed compression system. The membrane unit can be positioned to output a permeate stream and a retentate stream. The membrane unit can be positioned to output the permeate stream to the mixing device as an oxidant forming feed stream to feed to the mixing device to form the oxidant. A hydrogen production system can be positioned to receive the at least one reformate stream to form at least one hydrogen-rich product stream. The hydrogen production system can have a carbon capture unit positioned upstream of a hydrogen recovery unit. The hydrogen recovery unit can be configured to form the at least one hydrogen-rich product stream. The carbon capture unit of the hydrogen production system can be configured to recover CO2 from the at least one reformate stream received by the hydrogen production system and output at least one CO2 recovery stream. The carbon capture unit of the hydrogen production system can be positioned and configured to output the at least one CO2 recovery stream so that one or more of: (i) a portion of the at least one CO2 recovery stream is feedable to the mixing device to form the oxidant, (ii) a portion of the at least one CO2 recovery stream is feedable to a compression system to form a CO2 product stream, and/or (iii) a portion of the at least one CO2 recovery stream is feedable to a tail gas stream outputtable from the hydrogen recovery unit for being mixed therewith and fed to the combustion chamber of the combustion device.

As another example, an apparatus for steam reforming can include a combustion device configured to combust a fuel with an oxidant in a combustion chamber of the combustion device to form flue gas and heat at least one reactant stream passed through the combustion device to form at least one reformate stream for production of hydrogen and a mixing device positioned to receive a mixing device portion of the flue gas from the combustion device to mix with oxygen from at least one source of oxygen to form the oxidant such that the oxidant comprises between 20 mol% O2 and 40 mol% O2, between 20 mol% CO2 and 80 mol% CO2, between 0 mol% N2 and 25 mol% N2, and between 0 mol% water and 40 mol% water. The apparatus can also include at least one of: (a) a first booster positioned downstream of the combustion device to help drive a flow of the flue gas to the mixing device and/or a carbon capture system; (b) an oxidant pre-heater positioned between the mixing device and the combustion chamber of the combustion device to pre-heat the oxidant before the oxidant is fed to the combustion chamber, the pre-heater positioned to receive a heating medium comprising boiler feed water for heating the oxidant to pre-heat the oxidant; and/or (c) at least one oxidant pre-heating heat exchanger conduit positioned in the combustion device to receive the oxidant from the mixing device and pre-heat the oxidant therein via flue gas within the combustion chamber before the oxidant is fed to the combustion chamber of the combustion device for combustion of the fuel and formation of the flue gas. The first booster can be configured as a fan, compressor, or other type of fluid flow boosting device that can help drive a flow of fluid downstream of the booster.

In some embodiments, the apparatus for steam reforming can also include a boiler feed water cooling device positioned to receive boiler feed water output from the pre-heater to cool the boiler feed water for cooling the boiler feed water to a temperature within a pre-selected boiler feed water temperature range.

Some embodiments can utilize a hydrogen production system positioned to receive at least one reformate stream to form at least one hydrogen-rich product stream. The hydrogen production system can include a hydrogen recovery unit configured to form the at least one hydrogen-rich product stream. The hydrogen recovery unit can be positioned downstream of a water removal unit configured to remove water from the at least one reformate stream. A reformate stream cooling device can be positioned upstream of the hydrogen recovery unit and upstream of the water removal unit and downstream of a cooling train. The reformate stream cooling device can be positioned to receive a cooling medium to cool the at least one reformate stream to a temperature within a pre-selected water removal unit feed temperature range.

The hydrogen production system can also include a carbon capture unit positioned upstream of the hydrogen recovery unit. As mentioned above, the carbon capture unit of the hydrogen production system can be configured to recover CO2 from the at least one reformate stream received by the hydrogen production system and output at least one CO2 recovery stream. For instance, the carbon capture unit of the hydrogen production system can be positioned and configured to output the at least one CO2 recovery stream so that one or more of: (i) a portion of the at least one CO2 recovery stream is feedable to the mixing device to form the oxidant, (ii) a portion of the at least one CO2 recovery stream is feedable to a compression system to form a CO2 product stream, and/or (iii) a portion of the at least one CO2 recovery stream is feedable to a tail gas stream outputtable from the hydrogen recovery unit for being mixed therewith and fed to the combustion chamber of the combustion device.

In some embodiments, wherein the apparatus for steam reforming can include one or more of: (1) the first booster positioned to help drive the flow of the flue gas to the mixing device and/or the carbon capture system, (2) a second booster positioned to feed the first portion of the flue gas toward the carbon capture system and/or the third portion of the flue gas toward the mixing device; and/or (3) a third booster positioned to feed the third portion of the flue gas toward the mixing device.

For example, some embodiments of the apparatus for steam reforming can include the carbon capture system positioned to receive a carbon capture portion of the flue gas to recover CO2 from the carbon capture portion of the flue gas and one or more of: (1) the first booster positioned to help drive the flow of the flue gas to the mixing device and/or the carbon capture system; and/or (2) a second booster positioned to feed the carbon capture portion of the flue gas toward the carbon capture system.

In a ninth aspect, a process of steam reforming can include forming an oxidant. The oxidant can have between 20mol% O2 and 40 mol% O2, between 20 mol% CO2 and 80 mol% CO2, between 0 mol% N2 and 25 mol% N2, and between 0 mol% water and 40 mol% water. The process can also include combusting a fuel with the oxidant in a combustion device of a steam reformer apparatus to create a flue gas and heat at least one reactant stream to output at least one reformate stream and sending a mixing device portion of the flue gas to a mixing device to mix the mixing device portion of flue gas with oxygen from at least one source of oxygen to form the oxidant.

Embodiments of the process can be implemented via an embodiment of the apparatus for stream reforming.

In a tenth aspect, the process of steam reforming can include removing particulates from a carbon capture portion of the flue gas upstream of a feed compression system of a carbon capture system and sending the carbon capture portion of the flue gas to the carbon capture system for recovery of CO2. In some embodiments, the process can also include outputting an oxidant forming feed stream from the carbon capture system to feed to the mixing device to mix with the mixing device portion of the flue gas and the oxygen to form the oxidant.

In an eleventh aspect, the process of stream reforming can include splitting a second portion of the flue gas from a first portion of the flue gas. The mixing device portion of the flue gas can include the second portion of the flue gas and the carbon capture portion of the flue gas can include the first portion of the flue gas. In some embodiments, the process can also include splitting a third portion of the flue gas from the first portion of the flue gas after the first portion of the flue gas is passed through a cooler unit positioned between a location at which the second portion of the flue gas was split from the first portion of the flue gas and a feed compression system of the carbon capture system. The third portion of the flue gas and the second portion of the flue gas can be fed to the mixing device as the mixing device portion of the flue gas for forming the oxidant. In some embodiments, the third portion of the flue gas and second portion of the flue gas can be mixed together prior to being fed to the mixing device. Such mixing can be performed to control a temperature of the mixing device portion of the flue gas, for example.

For example, the feeding of the third portion of the flue gas and the second portion of the flue gas to the mixing device can include mixing the second portion of the flue gas with the third portion of the flue gas upstream of the mixing device to form the mixing device portion of the flue gas. The splitting of the third portion of the flue gas from the first portion of the flue gas can be performed to control a temperature of the mixing device portion of the flue gas so that the mixing device portion of the flue gas has a pre-selected temperature within a pre-selected temperature range. In some embodiments, the mixing device portion of the flue gas is between 30% and 90% of the flue gas and the first portion of the flue gas is a remainder of the flue gas.

In a twelfth aspect, the process of steam reforming can include feeding at least one reformate stream to a hydrogen production system to form at least one hydrogen-rich product stream and treating the at least one reformate stream via a carbon capture unit positioned upstream of a hydrogen recovery unit to recover CO2 from the at least one reformate stream received by the hydrogen production system and output at least one CO2 recovery stream. Embodiments can also include one or more of: (i) feeding a portion of the at least one CO2 recovery stream to the mixing device to form the oxidant, (ii) feeding a portion of the at least one CO2 recovery stream to a compression system to form a CO2 product stream, and/or (iii)
feeding a portion of the at least one CO2 recovery stream to a tail gas stream outputtable from the hydrogen recovery unit for being mixed therewith and fed to a combustion chamber of the combustion device. Some embodiments may only use one of these options (i) through (iii), other embodiments can use a combination of two of options (i) through (iii) and yet other embodiments can use all three (iii) of these options.

In a thirteenth aspect, the process of steam reforming can include sending a carbon capture portion of the flue gas to a carbon capture system to form a first CO2-rich stream and a second CO2-rich stream. The first CO2-rich stream can be outputtable at a pressure that is higher than a pressure of the second CO2-rich stream. The second CO2-rich stream can be fed to a first stage of a CO2 product stream compression system for forming a first CO2 product stream and the first CO2-rich stream can be fed to a second stage of the CO2 product stream compression system for forming the first CO2 product stream. The first CO2 product stream can have a pre-selected CO2 content (e.g. a CO2 content of between 90 mol% CO2 and 100 mol% CO2 or a CO2 content of between 95 mol% CO2 and 100 mol% CO2, etc.).

In a fourteenth aspect, the process of stream reforming can include one or more other features. For instance, the process of steam reforming of the ninth aspect can include one or more features of the tenth aspect, eleventh aspect, twelfth aspect, and/or thirteen aspect. It should therefore be understood that other embodiments can utilize other features or other combinations of features. Examples of such combinations of features can be appreciated from the exemplary embodiments discussed herein.

For example, a process of steam reforming can include forming an oxidant having between 20 mol% O2 and 40 mol% O2, between 20 mol% CO2 and 80 mol% CO2, and between 0 mol% N2 and 25 mol% N2, combusting fuel with the oxidant in a combustion device of a steam reformer apparatus to create flue gas and heat at least one reactant stream to output at least one reformate stream, sending a mixing device portion of the flue gas to a mixing device to mix the mixing device portion of flue gas with oxygen from at least one source of oxygen to form the oxidant, and at least one of: (a) passing at least a portion of the flue gas toward the mixing device and/or a carbon capture system via at least one booster positioned downstream of the combustion device; and/or (b) pre-heating the oxidant before the oxidant is fed to a combustion chamber of the combustion device of the steam reformer apparatus for combustion of the fuel. The pre-heating of the oxidant can include (i) pre-heating the oxidant via boiler feed water passed through an oxidant pre-heater to pre-heat the oxidant, and/or (ii) pre-heating the oxidant via passing the oxidant through at least one oxidant pre-heating heat exchanger conduit positioned in a convection section of the combustion device to pre-heat the oxidant via heat exchange with flue gas within the combustion device before the oxidant is fed to the combustion chamber for combustion of fuel.

Some embodiments of the process can also include cooling the boiler feed water output from the oxidant pre-heater to cool the boiler feed water to a temperature within a pre-selected boiler feed water temperature range and/or passing the boiler feed water through the convection section of the combustion device to heat the boiler feed water before the boiler feed water is passed through the oxidant pre-heater to pre-heat the oxidant.

Embodiments of the process can also include sending a carbon capture portion of the flue gas to a carbon capture system for recovery of CO2, removing particulates from the carbon capture portion of the flue gas, and outputting an oxidant forming feed stream from the carbon capture system to feed to the mixing device to mix with the mixing device portion of the flue gas and the oxygen to form the oxidant.

In some embodiments, the process can also include feeding the at least one reformate stream to a hydrogen production system to form at least one hydrogen-rich product stream; and cooling the boiler feed water output from the oxidant pre-heater to cool the boiler feed water to a temperature within a pre-selected boiler feed water temperature range via a boiler feed water cooling device that is positioned downstream of the oxidant pre-heater. At least one reformate stream can be treated via a carbon capture unit positioned upstream of the hydrogen recovery unit to recover CO2 from the at least one reformate stream received by the hydrogen production system and output at least one CO2 recovery stream as well.

In a fifteenth aspect, a control system for an apparatus for steam reforming is provided. Embodiments of the control system can be included in an embodiment of the apparatus for steam reforming. In some embodiments, the control system can include an oxygen analyzer positioned and configured to monitor O2 content of flue gas to be output from a combustion chamber of a combustion device of a reformer apparatus. The control system can also include a flow controlling mechanism controller of a flow control mechanism connected to an oxygen feed conduit through which oxygen passes for feeding to a mixing device to inject oxygen into gas to form an oxidant for feeding to the combustion chamber for combustion of a fuel to form the flue gas. The oxygen analyzer can be communicatively connected to the flow controlling mechanism controller such that a flow rate of oxygen passed to the mixing device is adjustable based on the content of O2 within the flue gas such that in response to data indicating the O2 content of the flue gas is below a pre-selected low O2 content threshold, the flow rate of oxygen passed to the mixing device is increased and in response to data indicating the O2 content of the flue gas is above a pre-selected high O2 content threshold, the flow rate of oxygen passed to the mixing device is decreased.

In a sixteenth aspect, the control system can include a flow rate sensor positioned to monitor the flow rate of oxygen passed to the mixing device. The flow rate sensor can be communicatively connected to the flow controlling mechanism controller so that adjustment of the flow rate of oxygen passed to the mixing device is based on the content of O2 within the flue gas and the flow rate of oxygen being passed to the mixing device.

In a seventeenth aspect, the control system can include a booster controller communicatively connected to at least one of: (a) a booster positioned and configured to help drive a flow of flue gas output from the combustion device to a carbon capture system and/or the mixing device, and/or (b) a damper positioned to facilitate the flow of the flue gas output from the combustion device to the carbon capture system and/or the mixing device, the damper adjustable between multiple different positions. The booster controller can be configured to: (i) adjust a speed of the booster based on oxygen content of oxidant being fed to the combustion device such that the speed of the booster is decreased in response to the oxygen content of the oxidant being above a pre-selected high O2 content threshold and the speed of the booster is increased in response to the oxygen content of the oxidant being below a pre-selected low O2 content threshold, and/or (ii) adjust a position of the damper based on oxygen content of oxidant being fed to the combustion device such that a flow rate of the flue gas is increased in response to the oxygen content of the oxidant being above a pre-selected high O2 content threshold and the flow rate of the flue gas is decreased in response to the oxygen content of the oxidant being below a pre-selected low O2 content threshold.

In some embodiments, the control system can also include a first flue gas flow rate sensor positioned upstream of the booster to measure a flow rate of the flue gas upstream of the booster where the first flue gas flow rate sensor is communicatively connected to the booster controller. A second flue gas flow rate sensor can be positioned downstream of the booster to measure a flow rate of the flue gas downstream of the booster wherein the second flue gas flow rate sensor is communicatively connected to the booster controller.

In an eighteenth aspect, the control system can include a flue gas flow controller communicatively connected to a feed compressor system of a carbon capture system positioned and configured to recover CO2 from a portion of the flue gas output from the combustion device to help drive a flow of the flue gas output from the combustion device to the carbon capture system and/or the mixing device. The flue gas flow controller can be configured to adjust a speed of a compressor of the feed compressor system based on oxygen content of oxidant being fed to the combustion device such that the speed of the compressor is decreased in response to the oxygen content of the oxidant being above a pre-selected high O2 content threshold and the speed of the compressor is increased in response to the oxygen content of the oxidant being below a pre-selected low O2 content threshold.

In a nineteenth aspect, the control system can include a flue gas flow controller communicatively connected to a feed compressor system of a carbon capture system positioned and configured to recover CO2 from a carbon capture system portion of the flue gas output from the combustion device to help drive a flow of the flue gas output from the combustion device to the carbon capture system and/or the mixing device. The flue gas flow controller can also be communicatively connected to a flue gas flow control mechanism positioned in fluid communication with a flue gas output conduit and/or a flue gas recycle conduit through which the flue gas passes to help control how the flue gas is split into the carbon capture portion of the flue gas and a mixing device portion of the flue gas. The flue gas flow controller can be configured to adjust an operational parameter of the feed compressor system and/or an operational parameter of the flue gas flow control mechanism based on oxygen content of oxidant being fed to the combustion device such that the flow of the flue gas fed to the carbon capture system is decreased in response to the oxygen content of the oxidant being above a pre-selected high O2 content threshold and the flow of the flue gas fed to the carbon capture system is increased in response to the oxygen content of the oxidant being below a pre-selected low O2 content threshold.

In a twentieth aspect, the control system can include a pressure controller positioned and configured to determine a pressure of flue gas in a stack of the combustion device to control a position of a damper for venting so that in response to the pressure of the flue gas being at or above a pre-selected vent pressure threshold, the damper is opened to vent the flue gas. The pressure controller and the damper can be configured so that the damper is maintained in a closed position to prevent venting unless the pressure of the flue gas is at or above the pre-selected vent pressure threshold.

In a twenty-first aspect, the control system can include a pressure controller positioned to monitor pressure of flue gas output from the combustion device for feeding to a carbon capture system positioned to receive a carbon capture portion of the flue gas from the combustion device and/or the mixing device. The pressure controller can be communicatively connected to at least one damper positioned for venting of the flue gas output from the combustion device for feeding to the carbon capture system and/or the mixing device to control a position of the at least one damper for venting so that in response to the pressure of the flue gas being at or above a pre-selected vent pressure threshold, the at least one damper is opened to vent the flue gas.

In a twenty-second aspect, the control system can include a pressure controller positioned and configured to determine a pressure of flue gas in a stack of the combustion device or in the combustion device. A controller be communicatively connected to a damper positioned to adjust a flow of flue gas output from the combustion device to the carbon capture system and/or the mixing device and/or the controller can be communicatively connected to a booster positioned and configured to help drive a flow of flue gas output from the combustion device to the carbon capture system and/or the mixing device. The controller can be onfigured to adjust a speed of the booster and/or a position of the damper. The pressure controller can be communicatively connected to the controller so that: (1) the speed of the booster is increased in response to the pressure of the flue gas being at or above a first pre-selected pressure that is below a pre-selected vent pressure threshold and also higher than a first pre-selected flue gas pressure and/or (2) the position of the damper is adjusted so that a flow rate of the flue gas output from the combustion device to the carbon capture system and/or the mixing device is increased in response to the pressure of the flue gas being at or above the first pre-selected pressure that is below the pre-selected vent pressure threshold and also higher than the first pre-selected flue gas pressure.

For example, in some embodiments, the pressure controller can be communicatively connected to the controller so that: (a) the speed of the booster is decreased in response to the pressure of the flue gas being at or below a second pre-selected pressure or the pressure of the flue gas is determined to be trending to a pre-selected low pressure threshold and/or (b) the position of the damper is adjusted so that a flow rate of the flue gas output from the combustion device to the carbon capture system and/or the mixing device is decreased in response to the pressure of the flue gas being at or below the second pre-selected pressure or the pressure of the flue gas is determined to be trending to the pre-selected low pressure threshold.

The booster can be positioned downstream of a location at which the flue gas output from the combustion device is split so a first portion of the flue gas is fed to the carbon capture system and a second portion of the flue gas is fed to the mixing device in some configurations. The booster can be positioned to help drive the first portion of the flue gas through the carbon capture system and the controller can be configured to adjust a speed of the booster based on the oxygen content of oxidant being fed to the combustion device such that the speed of the booster is decreased in response to the oxygen content of the oxidant being above the pre-selected high O2 content threshold and the speed of the booster is increased in response to the oxygen content of the oxidant being below the pre-selected low O2 content threshold.

The pressure controller can be positioned and configured to control a position of a vent damper in some embodiments. The pressure controller can be configured to control the position of the vent damper for venting so that in response to the pressure of the flue gas being at or above a pre-selected vent pressure threshold, the vent damper is opened to vent the flue gas.

In a twenty-third aspect, the control system can include other features. For instance, the control system of the fifteenth aspect can include one or more features of the sixteenth aspect, seventeenth aspect, eighteenth aspect, nineteenth aspect, twentieth aspect, twenty-first aspect and/or twenty-second aspect. Embodiments can also be utilized in the apparatus for steam reforming as noted above. It should therefore be understood that other embodiments of the control system can utilize other features or other combinations of features. Examples of such combinations of features can be appreciated from the exemplary embodiments discussed herein.

For example, in some embodiments a control system for an apparatus for steam reforming can include an oxygen analyzer positioned and configured to monitor O2 content of flue gas to be output from a combustion chamber of a combustion device of a reformer apparatus and a flow controlling mechanism controller of a flow control mechanism connected to an oxygen feed conduit through which oxygen passes for feeding to a mixing device to inject oxygen into gas to form an oxidant for feeding to the combustion chamber for combustion of a fuel to form the flue gas. The oxygen analyzer can be communicatively connected to the flow controlling mechanism controller such that a flow rate of oxygen passed to the mixing device is adjustable based on the content of O2 within the flue gas such that in response to data indicating the O2 content of the flue gas is below a pre-selected low O2 content threshold and the flow rate of oxygen passed to the mixing device is increased and in response to data indicating the O2 content of the flue gas is above a pre-selected high O2 content threshold, the flow rate of oxygen passed to the mixing device is decreased. A flue gas flow controller can be communicatively connected to a booster or a compressor of a feed compression system of a carbon capture system. The controller can be configured to adjust at least one operational parameter of the booster or at least one operational parameter of the compressor based on O2 content of oxidant being fed to the combustion device such that a flow rate of the flue gas fed to the carbon capture system is decreased in response to the O2 content of the oxidant being above a pre-selected high O2 content threshold and the flow rate of the flue gas fed to the carbon capture system is increased in response to the O2 content of the oxidant being below a pre-selected low O2 content threshold. A pressure controller can be positioned and configured to determine a pressure of flue gas in a stack of the combustion device or in the combustion device. The pressure controller can be communicatively connected to a damper of the stack and/or a booster controller so that a flow rate of the flue gas output from the combustion device is increased in response to the pressure of the flue gas being at or above a first pre-selected pressure that is below a pre-selected vent pressure threshold and also higher than a first pre-selected flue gas pressure and the flow rate of the flue gas output from the combustion device is decreased in response to the pressure of the flue gas being at or below a second pre-selected pressure or the pressure of the flue gas is determined to be trending to a pre-selected low pressure threshold.

In a twenty-fourth aspect, a process for controlling an apparatus for steam reforming is provided. Embodiments of this process can be included in an embodiment of a process for steam reforming, for example. Embodiments of the process for controlling an apparatus for steam reforming can include monitoring O2 content of flue gas to be output from a combustion chamber of a combustion device of a reformer apparatus and adjusting a flow rate of oxygen passed to a mixing device to form an oxidant fed to the combustion chamber for combustion of a fuel based on the content of O2 within the flue gas such that in response to the O2 content of the flue gas being below a pre-selected low O2 content threshold, the flow rate of oxygen passed to the mixing device is increased and in response to the O2 content of the flue gas being above a pre-selected high O2 content threshold, the flow rate of oxygen passed to the mixing device is decreased.

In a twenty-fifth aspect, the process for controlling an apparatus for steam reforming can also be configured so that the adjusting of the flow rate of oxygen passed to the mixing device is also based on a flow rate of oxygen being passed to the mixing device.

In a twenty-sixth aspect, the process for controlling an apparatus for steam reforming can also include adjusting a position of a damper and/or a speed of a booster positioned and configured to help drive a flow of flue gas output from the combustion device to a carbon capture system and/or the mixing device. The adjusting of the position of the damper and/or speed of the booster can be based on O2 content of the oxidant being fed to the combustion device such that a flow rate of the flue gas is increased in response to the O2 content of the oxidant being above the pre-selected high O2 content threshold and the flow rate of the flue gas is decreased in response to the O2 content of the oxidant being below the pre-selected low O2 content threshold.

In a twenty-seventh aspect, the process for controlling an apparatus for steam reforming can also include adjusting an operational parameter of a compressor of a feed compression system for a carbon capture unit positioned and configured to recover CO2 from a portion of the flue gas fed to the carbon capture system. The adjusting of the operational parameter of the compressor can be performed based on O2 content of the oxidant being fed to the combustion device such that a flow rate of flue gas fed to the carbon capture system is decreased in response to the O2 content of the oxidant being above the pre-selected high O2 content threshold and the flow rate of flue gas fed to the carbon capture system is increased in response to the O2 content of the oxidant being below the pre-selected low O2 content threshold.

In a twenty-eighth aspect, the process for controlling an apparatus for steam reforming can include determining a pressure of flue gas in a stack of the combustion device to control a position of a damper for venting so that in response to the pressure of the flue gas being at or above a pre-selected vent pressure threshold, the damper is opened to vent the flue gas.

In a twenty-ninth aspect, the process for controlling an apparatus for steam reforming can include determining a pressure of flue gas in a stack of the combustion device or in the combustion device. The process can also include one or more of: (1) adjusting a speed of a booster positioned and configured to help drive a flow of flue gas output from the combustion device to a carbon capture system and/or the mixing device wherein the adjusting of the speed of the booster is performed so that the speed of the booster is increased in response to a pressure of the flue gas being at or above a first pre-selected pressure that is below a pre-selected vent pressure threshold and also higher than a first pre-selected flue gas pressure and wherein the speed of the booster is decreased in response to a pressure of the flue gas being at or below a second pre-selected pressure or the pressure of the flue gas is determined to be trending to a pre-selected low pressure threshold; and/or (2) adjusting a position of a damper of the stack so that a flow rate of the flue gas output from the combustion device to the carbon capture system and/or the mixing device is increased in response to the pressure of the flue gas being at or above the first pre-selected pressure that is below the pre-selected vent pressure threshold and also higher than the first pre-selected flue gas pressure and the flow rate of the flue gas output from the combustion device to the carbon capture system and/or the mixing device is decreased in response to the pressure of the flue gas being at or below the second pre-selected pressure or the pressure of the flue gas is determined to be trending to the pre-selected low pressure threshold.

In some embodiments, the booster can be positioned downstream of a location at which the flue gas output from the combustion device is split so a first portion of the flue gas is fed to the carbon capture system and a second portion of the flue gas is fed to the mixing device. The booster can be positioned to help drive the first portion of the flue gas through the carbon capture system. The process for controlling an apparatus for steam reforming can also include adjusting the speed of the booster based on the O2 content of oxidant being fed to the combustion device such that the speed of the booster is decreased in response to the O2 content of the oxidant being above a pre-selected high O2 content threshold and the speed of the booster is increased in response to the O2 content of the oxidant being below a pre-selected low O2 content threshold.

In a thirtieth aspect, the process for controlling an apparatus for steam reforming can include other features or combinations of features. For example, the process of the twenty-fourth aspect can include one or more features of the twenty-fifth aspect, twenty-sixth aspect, twenty-seventh aspect, twenty-eighth aspect, and/or twenty-ninth aspect. It should therefore be understood that other embodiments can utilize other features or other combinations of features. Examples of such combinations of features can be appreciated from the exemplary embodiments discussed herein.

Aspects of the present invention include:
#1 An apparatus for steam reforming comprising:
   a combustion device configured to combust a fuel with an oxidant in a combustion chamber of the combustion device to form flue gas and heat at least one reactant stream passed through the combustion device to form at least one reformate stream for production of hydrogen;
   a mixing device positioned to receive a mixing device portion of the flue gas from the combustion device to mix with oxygen from at least one source of oxygen to form the oxidant such that the oxidant comprises between 20 mole percent (mol%) oxygen (O2) and 40 mol% O2, between 20 mol% carbon dioxide (CO2) and 80 mol% CO2, between 0 mol% nitrogen (N2) and 25 mol% N2, and between 0 mol% water and 40 mol% water; and
   a carbon capture system positioned to receive a carbon capture portion of the flue gas from the combustion device to recover CO2 and form at least one CO2 product stream.
#2 The apparatus of #1, wherein there is at least one particulate removal device positioned to remove particulates from the carbon capture portion of the flue gas upstream of a feed compression system of the carbon capture system.
#3 The apparatus of #2, wherein the carbon capture system is configured to output an oxidant forming feed stream to feed to the mixing device to mix with the mixing device portion of the flue gas and the oxygen to form the oxidant.
#4 The apparatus of #1, wherein the carbon capture portion of the flue gas is a first portion of the flue gas and the mixing device portion of the flue gas comprises a second portion of the flue gas, the mixing device portion of the flue gas being between 30% and 90% of the flue gas and the first portion of the flue gas is a remainder of the flue gas.
#5 The apparatus of #4, wherein the mixing device and the carbon capture system are positioned such that the second portion of the flue gas is split from the first portion of the flue gas upstream of a cooler unit positioned between a location at which the second portion of the flue gas is split from the first portion of the flue gas and the cooler unit; and
   wherein the carbon capture system comprises a feed compression system positioned to receive the first portion of the flue gas as the carbon capture portion of the flue gas from the cooler unit;
   the mixing device is positioned so that a third portion of the flue gas is splittable from the first portion of the flue gas upstream of the feed compression system and downstream of the cooler unit for feeding the third portion of the flue gas to the mixing device.
#6 The apparatus of #5, wherein the mixing device is positioned such that the second portion of the flue gas is mixed with the third portion of the flue gas to form the mixing device portion of the flue gas for feeding to the mixing device to form the oxidant.
#7 The apparatus of #6, wherein an amount of flue gas within the third portion of the flue gas is adjustable to form the mixing device portion of the flue gas to adjust a temperature of the mixing device portion of the flue gas.
#8 The apparatus of #1 comprising:
   a hydrogen production system positioned to receive the at least one reformate stream to form at least one hydrogen-rich product stream;
   the hydrogen production system having a carbon capture unit positioned upstream of a hydrogen recovery unit, the hydrogen recovery unit configured to form the at least one hydrogen-rich product stream;
   the carbon capture unit of the hydrogen production system configured to recover CO2 from the at least one reformate stream received by the hydrogen production system and output at least one CO2 recovery stream.
#9 The apparatus of #8, wherein the carbon capture unit of the hydrogen production system is positioned and configured to output the at least one CO2 recovery stream so that one or more of:
   a portion of the at least one CO2 recovery stream is feedable to the mixing device to form the oxidant,
   a portion of the at least one CO2 recovery stream is feedable to a compression system to form a CO2 product stream, and/or
   a portion of the at least one CO2 recovery stream is feedable to a tail gas stream outputtable from the hydrogen recovery unit for being mixed therewith and fed to the combustion chamber of the combustion device.
#10 The apparatus of #1, wherein the at least one CO2 product stream comprises a first CO2 product stream and the carbon capture system comprises a partial condensation unit positioned to receive compressed flue gas from a compression system of the carbon capture system and output a first CO2-rich stream and a second CO2-rich stream, the first CO2-rich stream being outputtable at a pressure that is higher than a pressure of the second CO2-rich stream;
   the second CO2-rich stream being feedable to a first stage of a CO2 product stream compression system for forming the first CO2 product stream and the first CO2-rich stream being feedable to a second stage of the CO2 product stream compression system for forming the first CO2 product stream, the first CO2 product stream having a CO2 content of between 90 mole percent (mol%) CO2 and 100 mol% CO2.
#11 A process of steam reforming, the process comprising:
   forming an oxidant, the oxidant having between 20 mole percent (mol%) oxygen (O2) and 40 mol% O2, between 20 mol% carbon dioxide (CO2) and 80 mol% CO2, between 0 mol% nitrogen (N2) and 25 mol% N2, and between 0 mol% water and 40 mol% water;
   combusting a fuel with the oxidant in a combustion device of a steam reformer apparatus to create a flue gas and heat at least one reactant stream to output at least one reformate stream;
   sending a mixing device portion of the flue gas to a mixing device to mix the mixing device portion of flue gas with oxygen from at least one source of oxygen to form the oxidant.
#12 The process of #11, comprising:
   splitting a second portion of the flue gas from a first portion of the flue gas, the mixing device portion of the flue gas comprising the second portion of the flue gas and the carbon capture portion of the flue gas comprising the first portion of the flue gas;
   splitting a third portion of the flue gas from the first portion of the flue gas after the first portion of the flue gas is passed through a cooler unit positioned between a location at which the second portion of the flue gas was split from the first portion of the flue gas and a feed compression system of the carbon capture system; and
   feeding the third portion of the flue gas and the first portion of the flue gas to the mixing device as the mixing device portion of the flue gas for forming the oxidant.
#13 The process of #12, wherein the feeding of the third portion of the flue gas and the second portion of the flue gas to the mixing device comprises mixing the second portion of the flue gas with the third portion of the flue gas upstream of the mixing device to form the mixing device portion of the flue gas; and
   wherein the splitting of the third portion of the flue gas from the first portion of the flue gas is performed to control a temperature of the mixing device portion of the flue gas so that the mixing device portion of the flue gas has a pre-selected temperature within a pre-selected temperature range.
#14 The process of #11, comprising:
   feeding the at least one reformate stream to a hydrogen production system to form at least one hydrogen-rich product stream;
   treating the at least one reformate stream via a carbon capture unit positioned upstream of a hydrogen recovery unit to recover CO2 from the at least one reformate stream received by the hydrogen production system and output at least one CO2 recovery stream; and
   one or more of:
      feeding a portion of the at least one CO2 recovery stream to the mixing device to form the oxidant,
      feeding a portion of the at least one CO2 recovery stream to a compression system to form a CO2 product stream, and/or
      feeding a portion of the at least one CO2 recovery stream to a tail gas stream outputtable from the hydrogen recovery unit for being mixed therewith and fed to a combustion chamber of the combustion device.
#15 The process of #11, comprising:
   sending a carbon capture portion of the flue gas to a carbon capture system to form a first CO2-rich stream and a second CO2-rich stream, the first CO2-rich stream being outputtable at a pressure that is higher than a pressure of the second CO2-rich stream; and
   feeding the second CO2-rich stream to a first stage of a CO2 product stream compression system for forming a first CO2 product stream and feeding the first CO2-rich stream to a second stage of the CO2 product stream compression system for forming the first CO2 product stream, the first CO2 product stream having a CO2 content of between 90 mole percent (mol%) CO2 and 100 mol% CO2.

It should be appreciated that embodiments of the process and apparatus can utilize various conduit arrangements and process control elements. The embodiments may utilize sensors (e.g., pressure sensors, temperature sensors, flow rate sensors, concentration sensors, etc.), controllers, valves, piping, and other process control elements. And, as noted above, some embodiments can utilize an automated process control system and/or a distributed control system (DCS). Various different conduit arrangements and process control systems can be utilized to meet a particular set of design criteria.

Other details, objects, and advantages of our apparatus for reduced nitrogen oxide formation during combustion, process for reduced nitrogen oxide formation during combustion, and methods of making and using the same will become apparent as the following description of certain exemplary embodiments thereof proceeds.

### BRIEF DESCRIPTION OF THE DRAWINGS

Exemplary embodiments of our apparatus for steam reforming, process for steam reforming, control apparatus for steam reforming, and control process for steam reforming, and methods of making and using the same are shown in the drawings included herewith. It should be understood that like reference characters used in the drawings may identify like components.
Figure 1 is a schematic diagram of a first exemplary embodiment of an apparatus for stream reforming.
Figure 2 is a schematic diagram of a second exemplary embodiment of an apparatus for stream reforming.
Figure 3 is a schematic diagram of a third exemplary embodiment of an apparatus for stream reforming.
Figure 4 is a schematic diagram of a fourth exemplary embodiment of an apparatus for stream reforming.
Figure 5 is a schematic diagram of a fifth exemplary embodiment of an apparatus for stream reforming.
Figure 6 is a schematic diagram of a sixth exemplary embodiment of an apparatus for stream reforming. A communication connection between different elements is shown in a dotted line format (e.g., ● ● ●) in Figure 6.
Figure 7 is a schematic diagram of a seventh exemplary embodiment of an apparatus for stream reforming.
Figure 8 is a schematic diagram of an eighth exemplary embodiment of an apparatus for stream reforming.
Figure 9 is a schematic diagram of an exemplary embodiment of a carbon recovery apparatus that can be utilized in embodiments of the apparatus for steam reforming.
Figure 10 is a schematic diagram illustrating a first exemplary embodiment of a control system CTRL for an exemplary embodiment of the apparatus for steam reforming. Communication connections between different elements of the control system are shown in a dotted line format (e.g., ● ● ●) in Figure 10. Embodiments of the control system can be utilized in embodiments of the apparatus for steam reforming.
Figure 11 is a schematic diagram illustrating a second exemplary embodiment of a control system CTRL for an exemplary embodiment of the apparatus for steam reforming. Communication connections between different elements of the control system are shown in a dotted line format (e.g., ● ● ●) in Figure 11. Embodiments of the control system can be utilized in embodiments of the apparatus for steam reforming.
Figure 12 is a schematic diagram illustrating a third exemplary embodiment of a control system for an exemplary embodiment of the apparatus for steam reforming. Communication connections between different elements of the control system are shown in a dotted line format (e.g., ● ● ●) in Figure 12. Embodiments of the control system can be utilized in embodiments of the apparatus for steam reforming.
Figure 13 is a flow chart illustrating a first exemplary process for stream reforming. Embodiments of the apparatus for steam reforming can implement this process.
Figure 14 is a flow chart illustrating a second exemplary process for steam reforming. Embodiments of the apparatus for steam reforming can implement this process.

### DETAILED DESCRIPTION

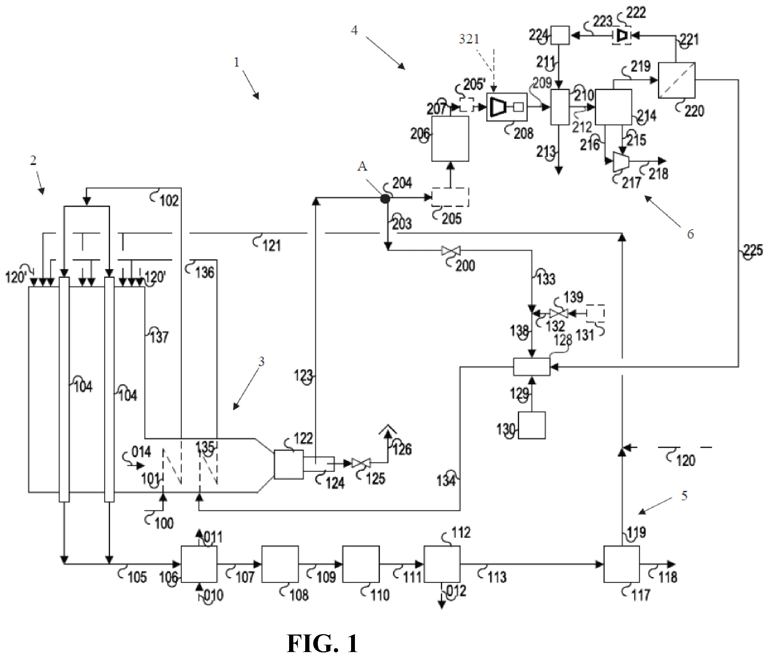

Referring to Figures 1-12, an apparatus for steam reforming 1 can include a steam reformer apparatus 2 that includes a combustion system 3 having a combustion device 137 in which at least one fuel is combusted to generate heat and form a flue gas, a carbon capture system 4 configured to process at least a portion of the flue gas to recover carbon dioxide (CO2) from the flue gas, and a hydrogen production system 5 configured to produce at least one hydrogen-rich product stream of hydrogen (H2). Each hydrogen-rich product stream can have at least 70 mole percent (mol%) H2 or between 80 mol% H2 and 100 mol% H2. Some hydrogen-rich product streams can be over 90 mol% H2 (e.g. between 95 mol% H2 and 100 mol% H2, etc.).

For example, a reactant feed stream 100 that can include a reactant (e.g. methane, natural gas, vaporized naphtha, etc. mixed with steam) can be passed through at least one combustion device reactant pre-heating conduit 101 for being warmed by heat. For example, heat from a stream of flue gas 014 formed from combustion of the fuel that can occur in the combustion chamber of the combustion device 137 can be utilized to heat fluid within a pre-heating conduit 101 positioned within the combustion device 137. In some embodiments, each reactant pre-heating conduit 101 can be positioned in a convection section of the combustion device 137, for example, so the heat from flue gas 014 can transferred for pre-heating the reactant feed stream 100. In some embodiments, feed stream 100 can be pre-heated before being sent to the pre-heating conduit as well.

The pre-heated reactant feed stream 102 can be output from the at least one combustion device reactant pre-heating conduit 101 at a pre-selected pre-heated temperature within a pre-selected pre-heated reactant temperature range. The pre-heated reactant feed stream 102 can be fed to one or more reformer conduits 104 via a pre-heated reformate feed conduit connected between the reformer conduit(s) 104 and the at least one combustion device reactant pre-heating conduit 101 so that the reactant feed stream can be passed through one or more reformer conduits 104 positioned within a radiant section of the combustion device 137 so that heat from combustion of fuel and/or flue gas 014 within the combustion device 137 can heat the reactant to produce a reformate stream 105.

Each reformer conduit 104 can include catalyst therein to facilitate a reaction of the reactant (e.g. a hydrocarbon material mixed with steam, methane mixed with steam, etc.) via the heating of the reactant to form the reformate stream 105. The catalyst used in the reformer conduit(s) 104 can be selected to meet a pre-selected set of design criteria. For instance, the catalyst material within the reformer conduit(s) 104 can include catalytic material that includes at least one metal (e.g. nickel, cobalt, platinum, palladium, rhodium, ruthenium, and/or iridium). In some embodiments, the catalyst can be a supported catalyst where the support comprises one or more of high temperature stable alumina, calcium aluminate, and magnesium aluminate. As yet another example, the catalyst of the reformer conduit(s) 104 can be a structured packing catalyst (e.g. packing in which catalyst material may be applied to the structured packing by a washcoat process or other impregnation or coating process).

The reformate stream 105 output from the one or more reformer conduits 104 can be cooled in a reformate cooling device 106. A reformate cooling device feed conduit can be positioned between the reformer conduit(s) 104 and the reformate cooling device 106 for feeding the reformate stream 105 to the reformate cooling device to function as a heating medium therein, for example. The reformate cooling device 106 can be a heat exchanger, for example, that can receive a feed of boiler feed water 010 for being heated via heat of the reformate stream for forming a stream 011. Steam 011 can include steam or can include steam mixed with water in some embodiments. The reformate can be cooled via heating the feed of water 010 to form the stream 011 and be output from the reformate cooling device 106 as a water-gas shift reactor feed stream 107.

A water-gas shift reactor feed conduit can be connected between the reformate cooling device 106 and a water-gas shift reactor 108 for feeding the water-gas shift reactor stream 107 to the reactor. The water-gas shift reactor 108 can be configured to shift the cooled reformate product to form additional hydrogen (H2) therein to increase the concentration of hydrogen therein.

A cooled and shifted reformate stream 109 can be output from the water-gas shift reactor 108. The cooled and shifted reformate stream 109 can be further processed to utilize heat from the stream and remove constituents from this stream to provide at least one hydrogen-rich product stream 118.

For example, the cooled and shifted reformate stream 109 can be fed to a cooling train 110 to be utilized as a heating medium therein for heating different process fluids. A cooling train feed conduit can be connected between the water-gas shift reactor 108 and cooling train 110 for feeding the shifted reformate stream 109 to the cooling train 110, for example. The cooling train 110 can be configured to utilize the shifted reformate stream 109 as a heating medium for one or more heat exchangers for pre-heating feed, boiled feed water, or other process fluids via the heat of the shifted reformate stream 109, which can result in cooling of the shifted reformate stream 110. A further cooled and shifted reformate stream 111 can be output from the cooling train 110 and fed to a water removal unit 112 (e.g. a knock-out drum, etc.). A water removal unit feed conduit can be connected between the water removal unit 112 and the cooling train 110 for feeding the further cooled and shifted reformate stream 111 to the water removal unit 112.

In some embodiments, an additional reformate stream cooling device can be positioned upstream of the water removal unit 112 and the cooling train 110. For example, in some embodiments, a heat exchanger that is configured to cool the reformate stream and heat boiler feed water or other process fluid can be positioned between the cooling train 110 and the water removal unit for further cooling before the stream is fed to the water removal unit 112. Such a heat exchanger can be included in a retrofit operation, for example. Such an additional type of heat exchanger arrangement can also be considered as being part of the cooling train 110 in some embodiments (e.g. an addition to a cooling train 110 or a supplement to it, etc.).

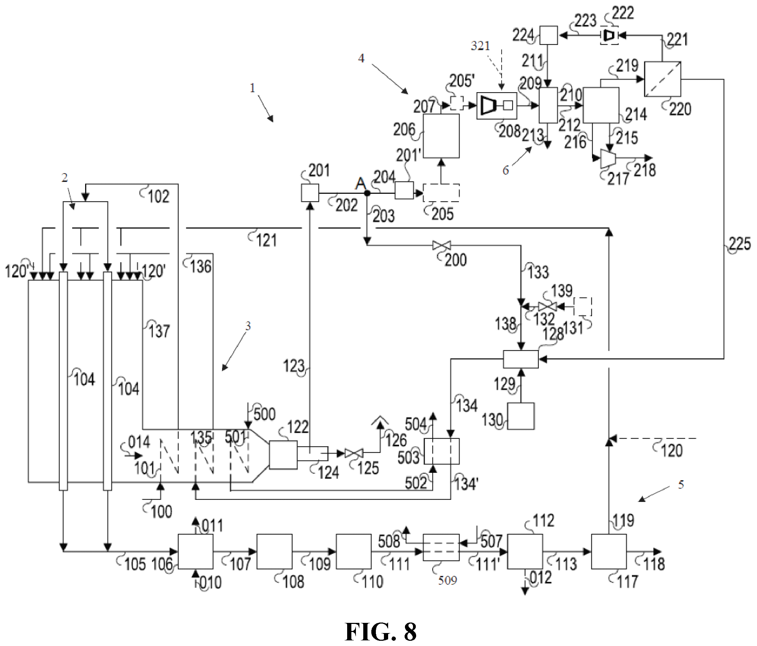

For example, the further cooled and shifted reformate stream 111 output from the cooling train 110 can undergo further cooling prior to being fed to the water removal unit 112 as shown in Figure 8. There, the further cooled and shifted reformate stream 111 output from the cooling train 110 can undergo cooling via a reformate stream cooling device 509 positioned downstream of the cooling train 110 and upstream of the water removal unit 112. The reformate stream cooling device 509 can be configured as a heat exchanger that can utilize a cooling medium feed 507 for further cooling the cooled and shifted reformate stream 111 for feeding the further cooled and shifted reformate stream 111' to the water removal unit 112. The warmed cooling medium can be output as a warmed cooling medium stream 508. In some embodiments, the cooling medium feed 507 can be air or chilling water and the warmed cooling medium stream 508 can be warmed water or warmed air output from the reformate stream cooling device 509.

The water removal unit 112 can be configured to remove water condensate from the cooled and shifted reformate stream 109 and output a water depleted reformate stream 113. The removed water condensate can be output from the water removal unit as a water condensate stream 012.

The water depleted reformate stream 113 can be output from the water removal unit 112 for further downstream processing. For example, the water depleted reformate stream 113 can be fed to a hydrogen recovery unit 117. An example of a hydrogen recovery unit 117 can include a pressure swing adsorption (PSA) system. Other examples of the hydrogen recovery unit 117, can include a temperature swing adsorption (TSA) system, or other suitable hydrogen recovery system.

The hydrogen recovery unit 117 can treat the water depleted reformate stream 113 and form a hydrogen-rich product stream 118. The hydrogen-rich product stream can have a relatively high concentration of hydrogen (e.g. be over 70 mole percent (mol%) H2, be over 90 mol% H2, be between 90 mol% H2 and 100 mol% H2, etc.). The hydrogen recovery unit 117 can also output a tail gas stream 119, which can include portions of the water depleted reformate stream 113 that was removed to form the hydrogen-rich product stream 118. This tail gas stream can include, for example, H2 and CO2 as well as other constituents (e.g. CO, methane (CH4), nitrogen (N2)). In some embodiments, the tail gas stream 119 can be fed to the combustion device 137 for being fed to the combustion device's burners for combustion and formation of flue gas within the combustion chamber of the combustion device 137.

In some embodiments, the tail gas stream 119 can be optionally preheated and/or optionally mixed with a feed of supplemental fuel 120 (e.g. methane, refinery off-gas, etc.) for being fed to the burner(s) of the combustion device 137 for combustion of the fuel and formation of the flue gas within the combustion chamber of the combustion device 137. For example, a tail gas combustion device feed conduit 121 can be positioned between the hydrogen production unit 117 and the combustion device 137 for feeding the tail gas stream 119 or mixture of the tail gas stream 119 and supplemental fuel 120 to the combustion device for combustion therein.

In some embodiments, additional fuel can be fed to the burners for combustion therein via at least one fuel stream 120'as well. In some embodiments that utilize at least one fuel stream 120', the tail gas stream 119 may not be mixed with supplemental fuel 120 when being recycled to the combustion device for being fed to the burners of the combustion device 137 and/or being fed to the combustion chamber of the combustion device 137. In other embodiments that utilize at least one fuel stream 120', the tail gas stream 119 can also be mixed with supplemental fuel 120 for being fed to the combustion device 137 and/or its burners for being combusted in the combustion chamber of the combustion device 137.

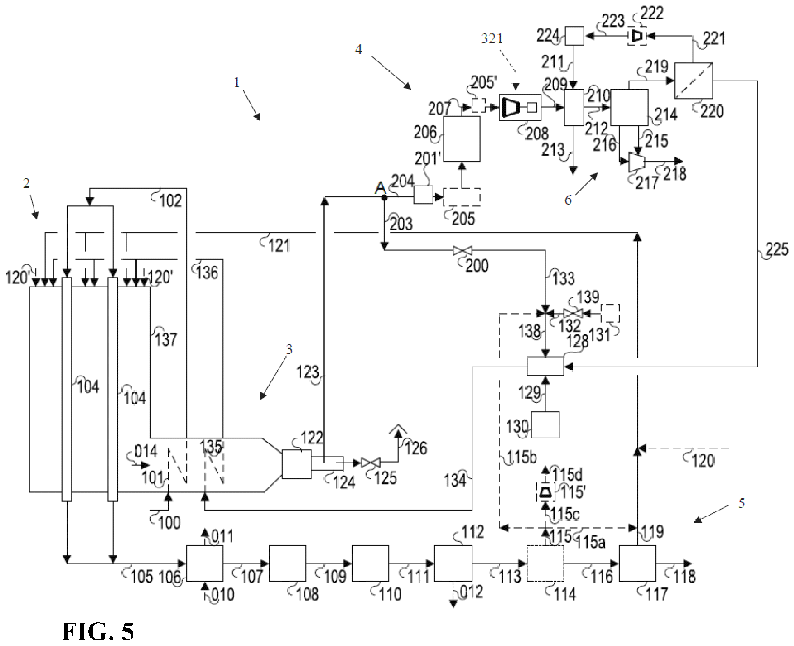

Prior to being treated by the hydrogen production unit 117, the water depleted reformate stream 113 output from the water removal unit 112 can undergo other processing. For example, as shown in Figure 5, the water depleted reformate stream 113 can be fed to a CO2 capture unit 114 (shown in broken line) positioned upstream of the hydrogen production unit 117 for removal of CO2 from the water depleted reformate stream 113 before that stream is fed to the hydrogen production unit 117. In some embodiments, the CO2 capture unit 114 can include an amine absorption system configured for CO2 recovery and/or a CO2 vacuum swing adsorption (VSA) system. The CO2 capture unit 114 can also include other CO2 capture devices. The CO2 removed via the CO2 capture unit 114 can be output as a CO2 recovery stream 115 for subsequent use. The CO2 content of the CO2 recovery stream 115 can be between 95 mol% CO2 and 100 mol% CO2 (dry basis) or greater than 98 mol% CO2 and up to 100 mol% CO2 (dry basis) in some embodiments.

The water depleted reformate stream 113 can have substantially all of its CO2 removed via the CO2 capture unit 114. For example, the water depleted reformate stream 113 can have between 85% and 100% of the CO2 within the stream removed via the CO2 capture unit 114.

At least a portion of the CO2 recovery stream 115 can be subsequently used by being fed to the tail gas stream 119 for being mixed with the tail gas stream 119 and being fed to the combustion device 137 for facilitation of combustion and formation of the flue gas 014 via a tail gas mixing conduit 115a (shown in broken line) connected between the CO2 capture unit 114 and the tail gas combustion device feed conduit 121.

As another example, at least a portion of the CO2 recovery stream 115 can be an oxidant stream formation portion of CO2 to be fed to a mixing device 128 for forming the oxidant via a CO2 recovery mixing device feed conduit 115b (shown in broken line) connected between the CO2 capture unit 114 and the mixing device 128. In embodiments where the tail gas mixing portion and oxidant formation portions of the CO2 recovery stream 115 are both present, one portion can be a first portion of the CO2 recovery stream 115 and the other portion can be the second portion of the CO2 recovery stream 115.

As yet another example, at least a portion of the CO2 recovery stream 115 can be fed to a compressor system 115' as a CO2 product stream feed 115c (shown in broken line). The compression system 115' (shown in broken line) can include a compressor configured to compress the CO2 to output a CO2 product stream 115d for use as a product, for use in a downstream process, or for being permanently sequestered. In embodiments where a portion of the CO2 recovery stream 115 is fed to the CO2 compression system 115', this portion can be considered a first portion, second portion, or third portion depending on whether the tail gas mixing portion and oxidant formation portions of the CO2 recovery stream 115 are also utilized. The proportions of the CO2 recovery stream 115 utilized in such portions can be adjusted to account for a pre-selected set of design criteria or to account for pre-defined operational criteria or other factors.

In yet other embodiments, the CO2 recovery stream 115 can be utilized as a CO2 product stream. For example, the CO2 recovery stream 115 can be fed to a pipeline or a storage unit for subsequently providing as a product to one or more other users. In yet other embodiments, the CO2 recovery stream 115 can be permanently sequestered.

At least one oxidant stream 136 can be fed to the combustion device 137 or combustion of fuel within a combustion chamber of the combustion device 137 for formation of flue gas 014 and generation of the heat that is subsequently used for heating of the reactant stream to form reformate. The oxidant stream can be a low nitrogen oxidant stream that is a type of formed synthetic air, for example. In some embodiments, the oxidant stream 136 can include an oxidant that is no more than 25 mol% nitrogen (N2), be between 2 mol% N2 and 25 mol% N2, or be between 2 mol% N2 and 15 mol% N2. In some embodiments, the oxidant can be between 0 mol% N2 and 10 mol% N2 or between 0 mol% N2 and 20 mol% N2, for example. The oxidant stream can also have a significant level of CO2 and sufficient oxygen (O2) to facilitate combustion. For example, the oxidant can be between 20 mol% O2 and 40 mol% O2 and be between 20 mol% CO2 and 80 mol% CO2 or the oxidant can be between 21 mol% O2 and 35 mol% O2 and between 20 mol% CO2 and 70 mol% CO2. As yet another example, the oxidant can be between 24 mol% O2 and 28 mol% O2 and be between 20 mol% CO2 and 60 mol% CO2.

In some embodiments, the oxidant can also include water (H2O). For example, the oxidant can include water vapor that is between 2 mol% and 40 mol% of the oxidant or have greater than 0 mol% water and no more than 40 mol% water. In some embodiments, the synthetic air that can be used as the oxidant can be formed so that there is a pre-selected ratio of water to CO2 (water/CO2). This pre-selected ratio can be 0.8, between 0 and 1.1, or between 0.6 and 0.9 in some embodiments. Other embodiments can also utilize another suitable ratio that may be configured to meet a particular set of design criteria.

The oxidant can also include relatively small amounts of other constituents. For example, the oxidant can also include a relatively small amount of argon (Ar) and/or carbon monoxide (CO) (e.g., the oxidant can have between 0 mol% Ar and 3 mol% Ar and/or between 0 mol% CO and 0.5 mol% CO in some embodiments).

For example, a formed synthetic air oxidant can include 20 mol% to 70 mol% CO2, 22 mol% to 35 mol% O2, 1 mol% Ar to 2 mol% Ar, 5 mol% N2 to 15 mol% N2, and 2 mol% water to 40 mol% water. As another example, formed synthetic air that can include 30 mol% CO2 to 60 mol% CO2, 21 mol% O2 to 28 mol% O2, 1 mol% Ar to 2 mol% Ar, 5 mol% N2 to 20 mol% N2, and 5 mol% water to 40 mol% water. As yet another example, the synthetic air that can be used as the oxidant can include 20 mol% CO2 to 70 mol% CO2, 20 mol% O2 to 40 mol% O2, 1 mol% Ar to 2 mol% Ar, 5 mol% N2 to 20 mol% N2, and 2 mol% water to 40 mol% water.

The oxidant can be formed via the mixing device 128 and subsequently fed to the combustion device 137 for combustion of fuel within the combustion chamber of the combustion device 137. For example, the formed oxidant can be fed to the combustion device 137 as an oxidant stream 136.

The oxidant stream 136 can be formed and pre-heated prior to being fed to the combustion device. For example, gas from at least one source of gas 131 (shown in broken line), gas output from carbon capture system 4 (e.g. oxidant forming feed stream 225), and/or a recycled portion of flue gas 014 formed in the combustion chamber of the combustion device 137 via combustion of the fuel (e.g. second portion 203 of flue gas and/or third portion 229 of the flue gas) can be fed to a mixing device 128 via a mixing device feed conduit 138 connected to the mixing device 128 and positioned to feed gas from one or more of these oxidant forming feeds of gas to the mixing device 128 for forming the oxidant.

The at least one source of gas 131 can include a flow control mechanism 139 (e.g. valve or damper or other mechanism) connected to an oxidant constituent gas feed conduit 132 that can be connected to the flue gas recycle conduit 133 and/or the mixing device feed conduit 138 for feeding gas from the source of gas 131 to the mixing device 128. The at least one source of gas 131 can be or include ambient air and/or at least one source of gas having CO2, such as CO2 gas stored in a CO2 storage tank, CO2 gas from a CO2 pipeline, or a CO2-rich flue gas from another process. The flow control mechanism 139 can be adjusted between a closed position and an open position so that gas from one or more sources of gas can be included in the mixing device for forming the oxidant during some operational cycles (e.g. during a start-up cycle or shutdown cycle in which there may be insufficient CO2-rich flue gas from the combustion device for forming the oxidant) and also be closed to prevent such gas from being included in the oxidant during other operational cycles (e.g. after a start-up of the reforming process and there is sufficient CO2-rich flue gas available from the recycling of flue gas output from the combustion device 137, during a cycle of operation where the reformer apparatus 2 is desired to use ambient air or oxygen enriched air as the oxidant for the combustion device 137, etc.).

A CO2-rich flue gas that can be utilized as a source of gas 131 can be a flue gas that has a significant content of CO2 (e.g. between 20 mol% CO2 and 50 mol% CO2, between 20 mol% CO2 and 70 mol% CO2, etc.). The CO2-rich flue gas can also be low in nitrogen (e.g. due to removal of nitrogen via a treatment process, etc.).

A feed of oxygen 129 from a source of oxygen 130 can also be fed to the mixing device 128 to form the oxidant. The source of oxygen can include a tank storing oxygen gas or a tank storing liquid oxygen that can be vaporized into a gas for forming the feed of oxygen 129. The source of oxygen 130 can also include a buffer tank that may store vaporized oxygen before it is fed to the mixing device 128. The source of oxygen 130 can also include an industrial grade feed of oxygen from an air separation unit (ASU), an adsorbent based vacuum swing adsorption system, a pressure swing adsorption system, and/or a water electrolyzer system that can output oxygen via electrolysis of water. An oxygen feed conduit can be connected between the source of oxygen 130 and the mixing device 128 for providing the feed of oxygen 129 to the mixing device 128.

The gas fed to the mixing device 128 can be utilized by the mixing device 128 to form the oxidant. For instance, the mixing device 128 can output a stream of oxidant 134 based on the gas fed to the mixing device 128 for the output stream of oxidant 134 to be fed to the combustion chamber of the combustion device 137. For instance, the output oxidant 134 can be fed directly to the combustion chamber without any preheating when the formed oxidant is at a sufficient temperature that pre-heating can be avoided. As another example, the output oxidant 134 can be subsequently preheated before it is fed to the combustion device 137. For example, the oxidant output from the mixing device 128 can be fed to at least one oxidant pre-heating heat exchanger conduit 135 positioned in the combustion device 137 for outputting the oxidant stream 136 at a pre-selected combustion chamber feed temperature for feeding to the combustion chamber for combustion of at least one fuel therein. The formed oxidant can have a pre-selected oxygen content (O2 content of the oxidant) that is between a pre-selected low O2 content threshold and a pre-selected high O2 content threshold.

An oxidant output conduit can be connected between the mixing device 128 and the at least one oxidant pre-heating heat exchanger conduit 135 for feeding the oxidant to be preheated. An oxidant combustion chamber feed conduit can be connected between the at least one oxidant pre-heating heat exchanger conduit 135 and the combustion chamber of the combustion device 137 for feeding the pre-heated oxidant to the combustion chamber.

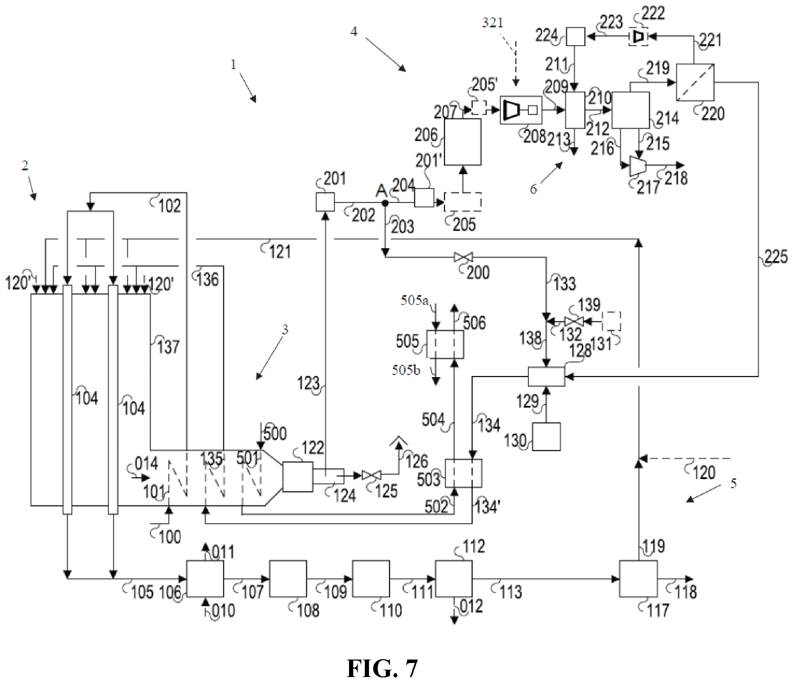

In some configurations, the oxidant can also be preheated via an oxidant preheater 503 positioned between the mixing device 128 and the combustion device 137. This type of preheating can occur without use of any pre-heating heat exchanger conduit(s) 135 or can be used in addition to use of one or more pre-heating heat exchanger conduits 135. Figures 7 and 8 illustrate examples of such an oxidant preheater 503. For example, a boiler feed water feed 500 from a source of boiler feed water can be fed to at least one boiler water pre-heating heat exchanger conduit 501 for pre-heating the boiler water. The heated boiler water can be sufficiently heated for functioning as a heating medium stream 502 in the oxidant preheater 503 via an oxidant pre-heater heating medium feed conduit connected between the at least one boiler water pre-heating heat exchanger conduit 501 and the oxidant pre-heater 503. The pre-heated oxidant can be output from the oxidant pre-heater 503 for being further pre-heated via the at least one oxidant pre-heating heat exchanger conduit 135 positioned in the combustion device 137 (e.g., positioned in a convection section of the combustion device). An oxidant pre-heater output conduit 134' can be connected between the oxidant pre-heater 503 and the at least one oxidant pre-heating heat exchanger conduit 135 to feed the preheated oxidant to the at least one oxidant pre-heating heat exchanger conduit 135.

In some embodiments that utilize oxidant pre-heater 503, the pre-heating may be sufficient so that there is no need to further preheat the oxidant via at least one oxidant pre-heating heat exchanger conduit 135 positioned in the combustion device 137. In such a situation, the preheated oxidant can be fed to the combustion chamber after being output from the pre-heater 503 without use of an oxidant pre-heating heat exchanger conduit 135 (e.g. the oxidant pre-heating heat exchanger conduit 135 can be omitted from such an embodiment).

In a configuration in which the boiler feed water is utilized as the heating medium for the oxidant pre-heater 503 (when utilized), it is contemplated that the boiler feed water may not be sufficiently cooled when its heat is used to pre-heat the oxidant. In such a situation, a boiler feed water cooling device 505 can be utilized to further cool the boiler feed water (e.g. Figure 7). For example, cooled boiler feed water stream 504 output from the oxidant pre-heater 503 can be fed to the boiler feed water cooling device 505 for being cooled therein by transferring heat to another fluid passed through the boiler feed water cooling device 505.

For example, the cooled boiler feed water stream 504 can be fed to the boiler feed water cooling device 505 for passing its heat to a process stream 505a fed to the boiler feed water cooling device 505 for being heated therein as shown in Figure 7. The heated process stream can be output from the boiler feed water cooling device 505 as heated process stream 505b. The process stream 505a that can be heated can be a cooling water stream from a water circuit or source of chilling water, for example. In other configurations, it is contemplated that the boiler feed water cooling device 505 can also, or alternatively, be configured as a chiller or an air cooler. The further cooled boiler feed water can be output from the boiler feed water cooling device 505 as a boiler feed water stream 506 for subsequent use (e.g. being fed to a boiler to form steam, etc.).

The formed oxidant that is pre-heated for feeding to the combustion chamber of the combustion device 137 can be fed to the combustion chamber to facilitate combustion of fuel therein. The heat from the combustion process and/or formed flue gas 014 can be passed to the reactant via the one or more reformer conduits 104 as discussed above for formation of hydrogen. The flue gas 014 that is formed can also be passed through the combustion device 137 for passing heat for pre-heating of the oxidant, reactant, and/or boiler feed water as discussed above. The flue gas 014 can then be passed through a stack 124 for being vented, recycled to the mixing device 128 for forming the oxidant, and/or being fed to the carbon capture system 4. An induced draft fan unit 122 can be connected to the combustion device 137 and positioned for facilitating the flow of the flue gas 014 through the stack 124 for the recycling of the flue gas 014 to the mixing device 128 for forming the oxidant, venting, and/or being fed to the carbon capture system 4.

Venting of the flue gas can be provided via a vent damper 125 positioned in a vent conduit 126 connected to the combustion device 137. The vent damper 125 can be closed to prevent venting under normal operational conditions. However, the vent damper 125 can be adjusted from its closed position to its open position to vent flue gas 014 to account for specific situations (e.g. a failure issue, a detected problem requiring venting to help ensure safety, etc.).

The flue gas 014 can be fed to the mixing device 128 and/or the carbon capture system 4 via a flue gas output conduit 123 connected to the stack 124 and/or combustion device 137. For example, the flue gas output conduit 123 can be connected to a flue gas recycle conduit 133 connected to the mixing device feed conduit 138 for feeding a portion of the flue gas 014 to the mixing device 128 for formation of the oxidant. The flue gas output conduit 123 can also be connected to a carbon capture system feed conduit for feeding flue gas 014 output from the combustion device 137 to the carbon capture system 4 for recovery of CO2.

The carbon capture system portion of the flue gas can be between 30% and 70% of the flue gas 014 output from the combustion device. The remaining portion of the flue gas 014 can be the mixing device portion of the flue gas (e.g. be between 70% and 30% of the flue gas 014). In the event venting may occur, the proportion of flue gas that may be included in the carbon capture portion and mixing device portion may be adjusted to account for the venting. However, venting may only occur rarely to account for a detected occurrence as noted above.

In some embodiments, between 30% and 90% of the flue gas output from the combustion device 137 for feeding to the flue gas output conduit 123 can be passed to the mixing device 128 via the flue gas recycle conduit 133 as the mixing device portion of the flue gas. The remainder (e.g. between 10% and 70% of the flue gas fed to the flue gas output conduit 123) can be passed to the CO2 capture system 4 as the carbon capture portion. A ratio of the flue gas recycled for forming oxidant to the flue gas fed to the carbon capture system for CO2 recovery can range from 9:1 to 3:7 in such embodiments.

In other embodiments, between 45% and 90% of the flue gas output from the combustion device 137 for feeding to the flue gas output conduit 123 can be passed to the mixing device 128 via the flue gas recycle conduit 133 as the mixing device portion. The remainder (e.g. between 10% and 55% of the flue gas fed to the flue gas output conduit 123) can be passed to the CO2 capture system 4 as the carbon capture portion. A ratio of the flue gas recycled for forming oxidant to the flue gas fed to the carbon capture system for CO2 recovery can range from 9:1 to 9:11 in such embodiments.

In yet other embodiments, between 40% and 60% of the flue gas output from the combustion device 137 for feeding to the flue gas output conduit 123 can be passed to the mixing device 128 via the flue gas recycle conduit 133 as the mixing device portion. The remainder (e.g. between 60% and 40% of the flue gas fed to the flue gas output conduit 123) can be passed to the CO2 capture system 4 as the carbon capture portion. A ratio of the flue gas recycled for forming oxidant to the flue gas fed to the carbon capture system for CO2 recovery can range from 2:3 to 3:2 in such embodiments.

In yet other embodiments, between 45% and 55% of the flue gas output from the combustion device 137 for feeding to the flue gas output conduit 123 can be passed to the mixing device 128 via the flue gas recycle conduit 133 as the mixing device portion. The remainder (e.g. between 55% and 45% of the flue gas fed to the flue gas output conduit 123) can be passed to the CO2 capture system 4 as the carbon capture portion. A ratio of the flue gas recycled for forming oxidant to the flue gas fed to the carbon capture system for CO2 recovery can range from 9:11 to 11:9 in such embodiments.

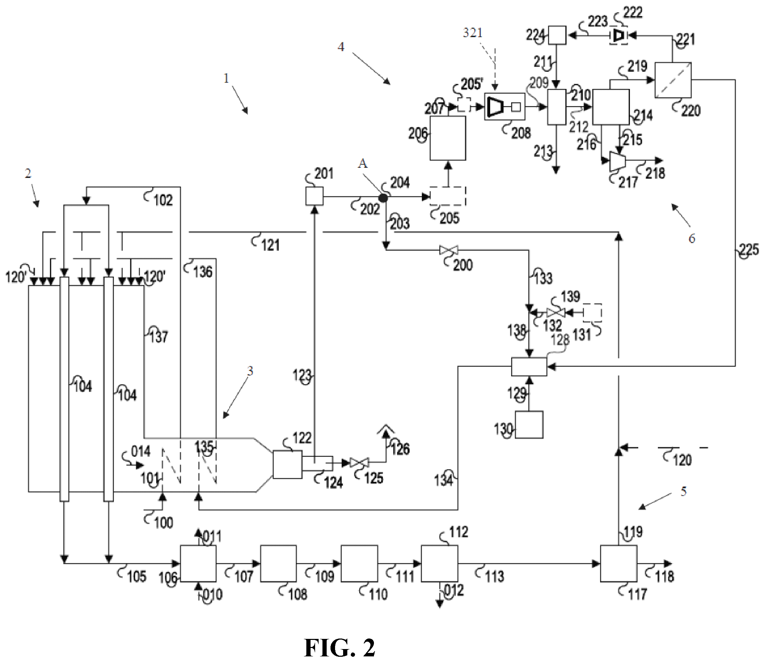

To help provide a sufficient or desired flow of the flue gas 014 to the mixing device 128 and through the carbon capture system 4, one or more boosters (e.g. fans, blowers, etc.) can be positioned to provide additional support to help drive the flow of flue gas 014 to the mixing device 128 and through the carbon capture system 4 for CO2 recovery. Examples of different flue gas flow boosters are illustrated in Figures 2, 3, 4, 6, 7, 8, and 10-12. Each booster can be a fan or booster fan that can be positioned in a conduit or connected to a conduit to help drive the flow of the flue gas.

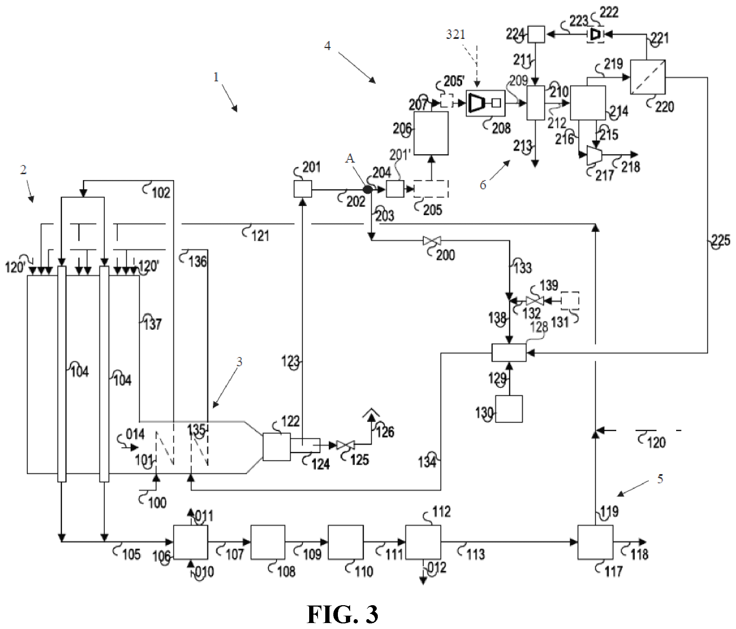

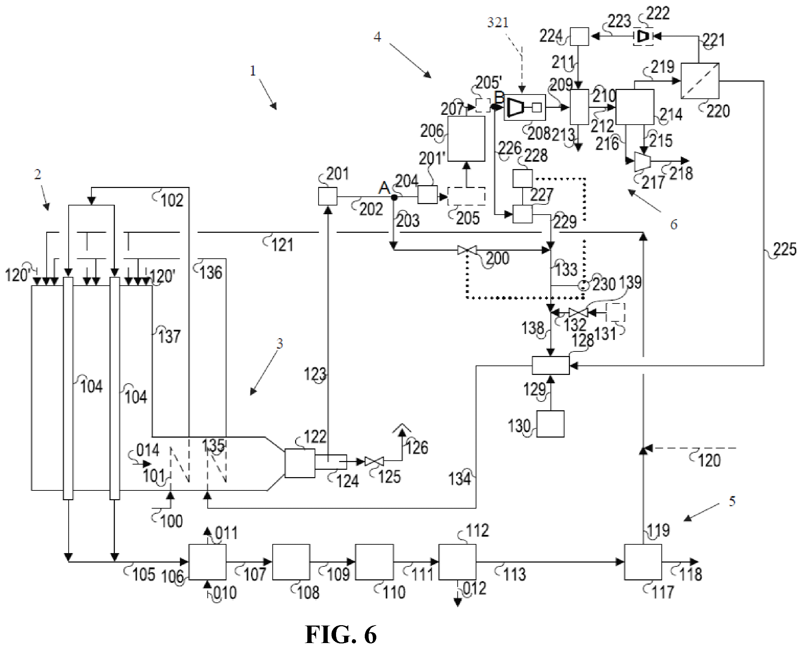

For example, there can be a first booster 201 that can be connected to the flue gas output conduit 123 upstream of where the flue gas 014 can be split to form the mixing device portion for oxidant formation and the carbon capture portion for CO2 recovery. The first booster 201 can help drive a flow of the flue gas toward the mixing device 128 and carbon capture system 4 at a higher flow rate and/or pressure via a first booster output conduit 202 connected between the flue gas output conduit 123, the mixing device 128, and a feed compression system 208 of the carbon capture system 4. In some embodiments, there can be a second booster 201' that can be positioned downstream of the splitting of the flue gas 014 and downstream of the first booster 201 to help drive flue gas through the carbon capture system 4 (*see e.g.*, Figure 3). A second booster can also be positioned upstream of a feed compression system 208 of the carbon capture system. For instance, in some configurations, a cold flue gas booster 227 can be positioned downstream of the first booster 201 (when utilized) and/or upstream of a feed compression system 208 of the carbon capture system 4 and the cold flue gas booster 227 can be configured to help drive a portion of the flue gas to the mixing device 128 (*see e.g.*, Figure 6) in situations where a portion of the flue gas fed to the mixing device 128 is split upstream of the feed compression system 208 of the carbon capture system 4. The cold flue gas booster 227 can be considered a cold flue gas booster by being positioned downstream of a cooler unit 206 that cools flue gas that is positioned between the location A at which the flue gas is split for feeding the carbon capture portion of the flue gas to the carbon capture system and the feed compression system 8 of the carbon capture system 4 and being configured to increase a flow rate of cooled flue gas output from the cooler unit 206 for feeding toward the mixing device 128.

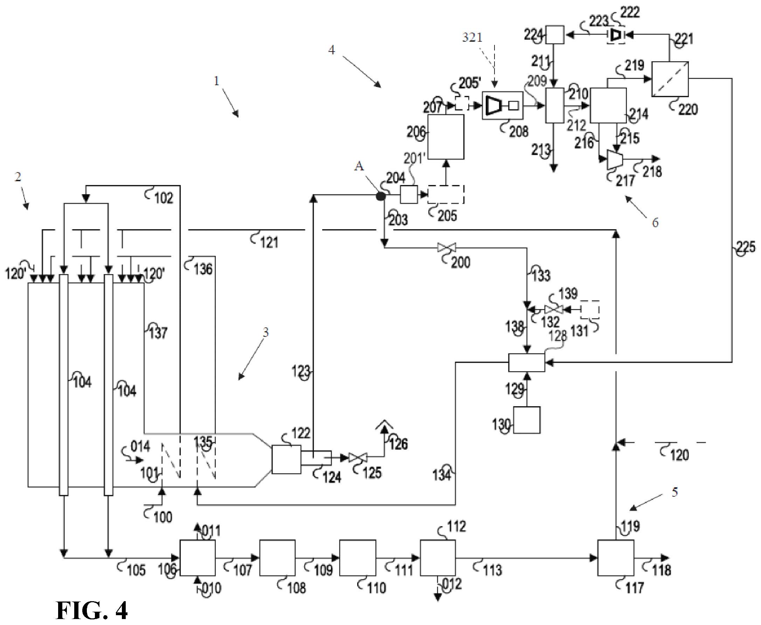

In some configurations, the first booster 201 may not be utilized, but the second booster 201' can be utilized. In such a configuration, the second booster 201' can be considered a first booster. This booster can be positioned downstream of the splitting of the flue gas 014 at location A and can be positioned to help drive flue gas through the carbon capture system 4, for example. Figure 4 illustrates an example of this type of configuration, for example.

In yet other embodiments, it is contemplated that the second booster 201' can be utilized and another booster may be utilized as the first booster instead of a first booster 201 upstream of the splitting of the flue gas and upstream of the second booster 201'. For instance, the cold flue booster 227 can alternatively be connected to the flue gas recycle conduit 133 to help drive flue gas to the mixing device 128 after the mixing device portion of flue gas is split from the carbon capture portion of the flue gas. In this configuration, a portion of the flue gas split as the mixing device portion is split upstream of the feed compression system 208 of the CO2 capture system 4 and the cold flue gas booster 227 can be positioned to help drive that portion of the flue gas to the mixing device.

In situations where the first booster 201 and second booster 201' are utilized, the cold flue gas booster 227 can be considered a third booster. In situations where the first booster 201 is used and the second booster 201' is not used, the cold flue gas booster 227 can be considered a second booster. In situations where the cold flue gas booster 227 is used and the second booster 201' is also used while first booster 201 is not used, the cold flue gas booster 227 can be considered a second booster and the second booster 201' can be considered a first booster.

The splitting of the flue gas 014 into the mixing device portion and the carbon capture portion can occur at a single location (e.g., location A or location B) or at various different locations (e.g., at both locations A and B) upstream of the mixing device 128 and feed compression system 208 of the carbon capture system 4 to meet a particular set of design criteria and operational objectives. In some embodiments, the splitting of the flue gas 014 can occur at different locations so that different split portions of the flue gas are combined to form the mixing device portion of flue gas that is fed to the mixing device 128 to form the oxidant (*see e.g.*, Figure 6).

For example, flue gas can be split into a first portion 204 and a second portion 203 upstream of the mixing device 128 and cooler unit 206 that is configured to pre-cool flue gas before the flue gas is fed to a feed compression system 208 of the carbon capture system 4 for undergoing CO2 recovery processing. In some embodiments, at least one flow control mechanism 200 (e.g. at least one valve or damper, a series of valves or dampers arranged in parallel, a series of valves or dampers arranged in series, etc.) can be positioned in fluid communication with the flue gas output conduit 123 and/or the flue gas recycle conduit 133 to help control how the flue gas is split into these portions.

The first portion 204 of the flue gas can be passed through a particulate removal device 205 (shown in broken line) that can be positioned upstream of the cooler unit 206 before undergoing cooling via the cooler unit 206. Alternatively, the flue gas can be passed through a particulate removal device 205' (shown in broken line) that can be positioned downstream of the cooler unit 206 and upstream of the feed compression system 208 (e.g. between the feed compression system 208 and the cooler unit 206). In yet other embodiments, it is contemplated that there can be both an upstream particulate removal device 205 and a second particulate removal device 205' downstream of the first particulate removal device 205.

The particulate removal device can be a suitable device or combination of devices configured to remove particulates from the flue gas (e.g. ash, refractory dust, etc.). For instance, a particulate removal device (e.g. particulate removal device 205 or 205') can be an electrostatic precipitator, a wet electrostatic precipitator, a scrubber, a Venturi scrubber, a cyclone, a bag house, or can be a particulate removal unit that includes a combination of these devices (e.g. a combination of two or more of these particulate removal units arranged to process the flue gas for particulate removal in series).

The cooler unit 206 can be a chiller, a water sprayed tower, or a heat exchanger that can use a refrigerant or cooling medium (e.g. chilling water, a process gas, etc.) to cool the flue gas and output a cooled flue gas stream 207. At least a portion of this cooled flue gas stream 207 can be fed to the feed compression system 208 of the carbon capture system 4 for undergoing CO2 recovery. In some embodiments, all of this cooled flue gas stream 207 can be fed to the feed compression system 208. In other embodiments, an adjustable portion of this cooled flue gas stream 207 can be fed to the feed compression system 208 as the carbon capture portion of the flue gas while another adjustable portion is formed as a third portion 229 of the flue gas for being fed to the mixing device 128 as a cooled mixing device portion of the mixing device portion of the flue gas to be fed to the mixing device 128. In such an implementation, the first portion 203 of the flue gas and this third portion 229 of the flue gas can be mixed together to form the mixing device portion of the flue gas that is fed to the mixing device 128 for forming the oxidant.

The adjustment of the amount of the third portion 229 of flue gas split from the first portion of the flue gas fed to the carbon capture system 4 as the cooled flue gas stream 207 can be adjusted to control a temperature of the mixing device portion of the flue gas that is fed to the mixing device 128. For instance, a cold flue gas booster 227 can have its speed adjusted to adjust a proportion of the third portion 229 that is formed to control a temperature of the mixing device portion formed via mixing of the second and third portions together to form the mixing device portion of the flue gas so that the formed mixing device portion of the flue gas has a pre-selected mixing device portion temperature within a pre-selected temperature range. Such a temperature or temperature range can be selected to help control a temperature of the oxidant to be formed via the mixing device 128, for example.

In situations where the portion of cooled flue gas stream 207 feedable to the mixing device 128 and carbon capture system 4 are adjustable, at least one valve can be positioned to help control that adjustment. The adjustability can range from all of the cooled flue gas stream 207 being fed to the carbon capture system 4 to only a portion of the cooled flue gas stream 207 being fed to the carbon capture system 4, for example.

In the event the cooled mixing device portion is split from the cooled flue gas stream 207, this portion can be passed to the flue gas recycle conduit 133 as a third portion 229 of the flue gas. This third portion 229 of the flue gas that can be formed at location B, for example, can be passed through a cooled mixing device portion conduit 226 connected to the flue gas recycle conduit 133. In situations where a cold flue gas booster 227 can be provided, the cold flue gas booster 227 can be connected to the cooled mixing device portion conduit 226 to help drive the flow of this flue gas toward the mixing device 128. The rotational speed of the cold flue gas booster 227 can be controlled to help adjust the portion of the cooled flue gas stream 207 that is fed to the mixing device 128 as the cooled third portion 229 of flue gas fed to the mixing device 128 as a part of the mixing device portion as well (or as an alternative to a valve).

The cooled mixing device portion of the flue gas that that is split from the carbon capture portion at location B can be mixed with a warmer portion that is split at location A as the second portion 203 of the flue gas. This mixing can be provided via an in-line mixer, mixing vessel, or other type of mixing mechanism that can be included in the flue gas recycle conduit 133 through which the first portion 203 and third portion 229 of flue gas can be passed for forming the mixing device portion of flue gas that can be used to form the oxidant.

The cooled mixing device portion and its flow rate that can be controlled by the cold flue gas booster 227 can be adjusted based on temperature data of a temperature sensor 230 that is connected to the flue gas recycle conduit 133. The temperature data of the temperature sensor can be communicated to a controller 228 of the cold flue gas booster 227 to adjust the flow rate of the cooled mixing device portion of the flue gas that is being fed to the flue gas recycle conduit 133 for mixing with the warmer second portion 203 of the flue gas to form the mixing device portion of the flue gas to be used to form the oxidant so that the mixing device portion has a pre-selected temperature within a pre-selected temperature range. This type of temperature control for the formation of the mixing device portion of the flue gas feedable to the mixing device 128 can help facilitate formation of an oxidant having a more desirable temperature for controlling the feed temperature of the oxidant stream 136 fed to the combustion chamber of the combustion device 137. The temperature control that can be provided can permit the mixing device portion of the flue gas to be formed so that the oxidant formed via the mixing device 128 is at a pre-selected temperature within a pre-selected oxidant temperature range. For instance, this temperature can be in a range of between -20°C and 200°C or between 20°C and 120°C.

In other embodiments, the flue gas can be split only at a single location (e.g. location A or location B). In such an implementation, the third portion 229 of the flue gas can be considered the second portion of the flue gas in a situation where this portion is formed and the second portion 203 is not formed at location A. And in some implementations where there is no third portion 229 formed via location B, the second portion 203 can be the only portion of the flue gas that can be split from the flue gas passed into the flue gas output conduit 123 for feeding to the mixing device 128 as the mixing device portion.

In some configurations, the mixing device 128 can be positioned and configured to also receive other gas for mixing with oxygen to form oxidant for feeding to the combustion chamber of the combustion device 137. For instance, the mixing device 128 can be configured and positioned to receive an oxidant forming feed stream 225 from the carbon capture system 4 for use in mixing with the oxygen from the source of oxygen 130 and flue gas from the flue gas recirculation conduit 133 to form the oxidant.

The oxidant forming feed stream 225 can be produced via operation of the carbon capture system 4. This oxidant forming feed stream 225 may be a relatively small stream and can be fed to the mixing device 128 to help form the oxidant instead of venting that stream. In alternative embodiments, this formed oxidant forming feed stream 225 may be vented instead of fed to the mixing device 128.

Embodiments that utilize the oxidant forming feed stream 225 for formation of the oxidant instead of venting it, can be configured to form this oxidant forming feed stream 225 and feed it to the mixing device 128 for forming the oxidant. For example, after the carbon capture portion of the flue gas is fed to the feed compression system 208 of the carbon capture system 4 to undergo compression and be output as a compressed flue gas stream 209 for feeding to assembly of elements 6 of the carbon capture system 4 that are downstream of the feed compression system 208. The feed compression system 208 can also include a sour gas purification unit and/or at least one chiller so that the compressed flue gas stream 209 has a pre-selected carbon capture temperature, pressure, and/or composition for feeding to an adsorption system 210. the adsorption system can be a temperature swing adsorption (TSA) system, for example.

The adsorption system 210 can remove water or other constituents from the flue gas to output a purified CO2-rich flue gas stream 212 for feeding to a cold partial condensation unit 214 for formation of at least one CO2-lean stream 219 and one or more CO2-rich streams. The water and other constituents that are removed can be removed to avoid such constituents freezing during downstream processing that may cause maintenance problems or other processing problems, for example.

The CO2-lean stream 219 that is formed can have a lower concentration of CO2 as compared to the one or more CO2-rich streams (e.g. CO2-lean stream 219 can have a CO2 content of between 10 mol% CO2 and 80 mol% CO2, between 10 mol% CO2 and 50 mol% CO2, or between 20 mol% CO2 and 30 mol% CO2, etc.).

In some embodiments, the cold partial condensation unit 214 can output a first CO2-rich stream 215 having at least 95 mol% CO2 or between 95 mol% and 100 mol% CO2 and a second CO2-rich stream 216 having at least 95 mol% CO2 or between 95 mol% and 100 mol% CO2. The first CO2-rich stream can be output at a pressure that is higher than the pressure of the second CO2-rich stream. In other embodiments, it is contemplated that the cold partial condensation unit 214 can output a single CO2-rich stream having a high CO2 content (e.g. a CO2 content of between 90 mol% and 100 mol%, a CO2 content of between 95 mol% and 100 mol%, etc.).

The one or more CO2-rich streams can be fed to a CO2 product stream compressor system 217 to form a CO2 product stream 218 in some embodiments. This CO2 product stream 218 can be considered a first CO2 product stream in some embodiments. In such embodiments, the CO2 product stream 115d (when formed) can be considered a second CO2 product stream.

For example, in situations where the second CO2-rich stream 216 and first CO2-rich stream 215 are provided, the second CO2-rich stream can be fed to a first stage of a compression system 217 and the first CO2-rich stream 215 having a higher pressure can be fed to another stage of the compression system 217 (e.g. a second stage of the compression system 217 that can be downstream of the first stage of the compression system 217) for outputting a CO2 product stream 218 at a desired CO2 product pressure, which can be selected for storage in a CO2 storage tank, feeding to a CO2 liquefaction system, feeding to a CO2 pipeline, use in another plant process, for permanent sequestration, or for another desired purpose.

In other embodiments, each CO2-rich stream that is output from the cold partial condensation unit 214 can be considered a product stream that is output for storage, sequestration, and/or other downstream use. Each CO2-rich stream that is outputtable form the cold partial condensation unit 214 (e.g., the first CO2-rich stream 215 and/or second CO2-rich stream 216, etc.) can have a substantial CO2 content of at least 90 mol% CO2 (e.g. between 95 mol% CO2 and 100 mol% CO2, between 99 mol% CO2 and 100 mol% CO2, etc.).

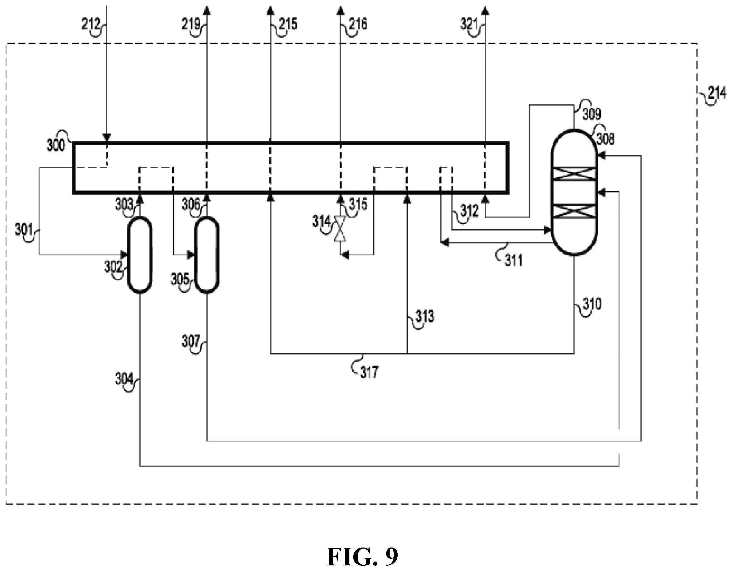

Figure 9 illustrates an example of the cold partial condensation unit 214 that can be utilized in some embodiments. For instance, the purified CO2-rich flue gas stream 212 output from the adsorption system 210 can be fed to a heat exchanger 300 for cooling that fluid. The cooled fluid can be output from the heat exchanger 300 and fed to a first separator 302 via a first separator feed conduit 301 connected between the heat exchanger 300 and the first separator 302. The first separator 302 can output a first CO2 liquid stream 304 that is comprised substantially of CO2 and a vapor stream 303 that can be passed to the heat exchanger 300 for cooling the CO2-rich flue gas stream 212 and subsequently being fed to a second separator 305. The second separator 305 can output a second liquid stream 307 comprised substantially of CO2 and a second vapor stream 306 that can be passed through the heat exchanger 300 as a cooling medium and subsequently output from the heat exchanger as the CO2-lean stream 219. The first and second liquid streams 305 and 307 can be fed to a stripper column 308 to remove oxygen (O2) from the fluid. The stripper column 308 can process the liquid streams to form a CO2-lean vapor stream 309 that can be fed to the heat exchanger 300 for cooling the purified CO2-rich flue gas stream 212 and output as a lean CO2 stream 321 for venting or for recycling to the carbon capture feed compression system 208. The stripper column 308 can also output a fist liquid stream 310 as a high pressure CO2-rich stream 310. This stream can be fed to the heat exchanger 300. A first portion of this stream 317 can be passed through the heat exchange 300 to function as a cooling medium therein and subsequently be output as the first CO2-rich stream 215, for example.

In some embodiments, the high pressure CO2-rich stream 310 can be split to form a second portion 313 that can be fed to the heat exchanger for functioning as a cooling medium therein and subsequently be passed through an expansion device 314 (e.g. a valve or expander) to expand the fluid and further cool it. This expanded CO2-rich fluid 315 can be output from the expansion device 314 for being fed back to the heat exchanger 300 to provide additional refrigeration before the CO2-rich fluid is output as the second CO2-rich stream 216, which can be at a pressure that is lower than the pressure of the first CO2-rich stream 215.

The stripper column 308 can be operated to provide a reboil stream. For example, a portion of fluid 311 can be output from the column 308 for undergoing warming in the heat exchanger 300 as a cooling medium therein to help cool the purified CO2-rich flue gas stream 212 for recycled back to the stripper column 308 as a vaporized or more fully gaseous stream of fluid 312 to facilitate oxygen removal from the fluid to improve the CO2 recovery from the fluid and help produce the CO2-lean vapor stream 309.

The CO2-lean stream 219 output from the cold partial condensation unit 214 can be fed to a membrane unit 220 via a membrane feed conduit positioned between the membrane unit 220 and the cold partial condensation unit 214. The membrane unit 220 can include or be a membrane separator or a series of membrane separators configured to separate a membrane permeate stream that includes some O2 therein (e.g. greater than 0 mol% O2 and less than or equal to 40 mol% O2, between 5 mol% O2 and 30 mol% O2, between 10 mol% O2 and 25 mol% O2, etc.). The membrane permeate stream can be output from the membrane unit as the oxidant forming feed stream 225 for being fed to the mixing device 128.

The membrane unit 220 can also output a retentate stream 221, which can have reduced O2 as compared to the CO2-lean stream 219 that is fed to the membrane unit 220 (e.g. between 0 mol% O2 and 20 mol% O2, etc.). The retentate stream 221 can also include a reduced concentration of CO2 as compared to the CO2-lean stream 219 that is fed to the membrane unit 220 (e.g. between 0 mol% CO2 and 20 mol% CO2, etc.). All of the retentate stream 221 or a portion of this stream can be fed to the adsorption system 210 for use as a regeneration gas for regeneration of one or more off-line adsorbers of the adsorption system. This retentate stream 221 can then be vented. A portion of the retentate stream 221 that may not be used as a regeneration gas can also be vented or can be recycled back to the feed compression system 208.

For regeneration of an off-line adsorber, the retentate stream 221 can optionally be fed to a regeneration gas expander 222 for expansion and/or undergo heating via a regeneration gas heater 224 for feeding the retentate stream to the adsorption system 210 as a regeneration gas stream 211. The regeneration gas heater 224 can be an electric heater, a steam heater, a heat exchanger connected to the combustion device 137 for use of heat from flue gas of the combustion device 137 for heating the regeneration gas, or other type of heater. A regeneration gas feed conduit 223 can be connected between the membrane unit 220 and the adsorption system 210 to feed the retentate stream 221 to the adsorption unit 210 for use as a regeneration gas. The used regeneration gas having elements removed from adsorbent material within the off-line adsorber for regeneration of that material can be output from the adsorption system 210 as a vent stream 213 for being vented or otherwise processed.

Embodiments of our steam reformer apparatus 2 can be configured to utilize a combustion system 3 that can use a formed synthetic air as the oxidant so that the formed synthetic air has a low level of N2 (e.g. from 20 mol% N2 to 0 mol% N2, below 15 mol% N2, below 10 mol% N2, etc.). The formed oxidant can also have a suitable level of oxygen (e.g. between 20 mol% O2 and 35 mol% O2, between 22 mol% O2 and 30 mol% O2, etc.) and can have a desired level of water (e.g. from 0 mol% water to 40 mol% water). The synthetic air used as the oxidant can have a significant level of CO2 (e.g. between 20 mol% CO2 and 60 mol% CO2, between 30 mol% CO2 and 70 mol% CO2, between 20 mol% CO2 and 80 mol% CO2, etc.). The significant CO2 content within the oxidant can facilitate formation of a high CO2 content flue gas that can provide improved CO2 recovery via the carbon capture system. Further, low NOx emissions can be provided from combustion of the fuel in the combustion device 137 to form the flue gas.

For instance, (and as discussed above), the mixing device 128 can be configured for use of the oxygen and flue gas and other gas (e.g. the membrane permeate stream that can be output from the membrane unit 220 as the oxidant forming feed stream 225 for being fed to the mixing device 128) for formation of synthetic air as the formed oxidant that can include 20 mol% CO2 to 60 mol% CO2, 21 mol% O2 to 30 mol% O2, 1 mol% Ar to 3 mol% Ar, 5 mol% N2 to 15 mol% N2, and 5 mol% water to 40 mol% water. As another example, the mixing device 128 can be configured for use of the oxygen and flue gas for formation of synthetic air as the oxidant that can include 20 mol% CO2 to 70 mol% CO2, 20 mol% O2 to 40 mol% O2, 1 mol% Ar to 2 mol% Ar, 5 mol% N2 to 20 mol% N2, and 2 mol% water to 40 mol% water. Other examples of synthetic air that can be formed and utilized as the oxidant are discussed herein as well.

Prior to the steam reformer apparatus 2 and its combustion system 3 being in sufficient operation to have formed a consistent level of flue gas for formation of synthetic air as the oxidant via recycling the flue gas and injecting oxygen into a mixture of the recycled flue gas (e.g. the mixing device portion of flue gas passed to the mixing device 128 via recycle conduit 133) and the oxidant forming feed stream 225 output from the carbon capture system 4 (and also the CO2-rich stream provided by carbon capture unit 114 as an oxidant stream formation portion of CO2 to be fed to a mixing device 128 for forming the oxidant via the CO2 recovery mixing device feed conduit 115b as discussed above, when utilized), the oxidant can be formed by use of at least one source of gas 131. After sufficient flue gas is available, the feed of one or more other sources of gas 131 may be stopped (e.g. a flow control mechanism 139 for each source of gas 131 can be closed).

In some embodiments, this initial non-use of synthetic air formed primarily from recycled flue gas can be provided via use of ambient air as the source of gas and an oxygen enriched ambient air may be utilized for an initial start up period before flue gas recycling can be utilized to build up the CO2 content within the flue gas for synthetic air formation.

In other embodiments, the initial non-use of synthetic air formed primarily from the recycled flue gas 014 can be a synthetic air that utilizes a source of CO2 (e.g. CO2 storage and/or a CO2 pipeline) and/or a CO2-rich flue gas stored in a storage tank and/or available from another plant process for use in forming the synthetic air having the low N2 (e.g. below 20 mol% N2), sufficient O2 (e.g. between 20 mol% O2 and 40 mol% O2), and significant levels of CO2 as discussed above (and optionally a desired level of water, e.g. between 0 mol% water and 40 mol% water).

Temperature control for the oxidant formed via the mixing device 128 can be enhanced by utilization of the different flows of gas used to form the oxidant via the mixing device 128. For example, the recycled flue gas of the mixing device portion of flue gas fed to the mixing device 128 can have a different temperature than the oxidant forming feed stream 225 output from the membrane unit 220 of the carbon capture system 4. The oxygen provided by the source of oxygen 130 can also be at yet another different temperature when fed to the mixing device 128. The use of these different temperatures and adjustment of flow rates of these different flows of fluid can be utilized to help control a temperature of the oxidant formed via the mixing device 128. Such temperature control can be further enhanced by utilization of the third portion of the flue gas from location B discussed above that can be a cooler flue gas portion that can be mixed with the second portion 203 that is hotter so the mixed first and third portions of flue gas used to form the mixing device portion of flue gas to feed to the mixing device 128 is able to be more finely controlled temperature. The flue gas recycled to the mixing device 128 can make up a substantial portion of the overall formed oxidant, so the further refined control of the temperature of this fluid can have a substantial effect on being able to more acutely control the temperature of the formed oxidant (e.g. control the oxidant temperature with more precision while also providing a quicker ability to adjust the oxidant temperature to account for other detected conditions of the combustion system 3 and/or reformer apparatus 2).

We have also found that embodiments can permit enhanced heat integration for reformer apparatus arrangements that can be retrofit to utilize synthetic air having low N2 and significant levels of CO2 to forming CO2-rich flue gas. Such a retrofit can be provided to upgrade combustion device performance so reduced NOx emissions occur and/or to include a carbon capture system 4 and/or a CO2 capture unit 114 to reduce greenhouse gas emissions and/or provide additional CO2 product formation capabilities.

Further, some embodiments can be adapted for retrofit applications by providing enhanced heat integration with pre-existing boiler feed water circuits and/or combustion systems designed for use with ambient air or oxygen enriched air as the oxidant for combustion of fuel. For instance, the exemplary embodiments of Figures 7 and 8 can be advantageous for some retrofit applications by permitting better utilization of boiler feed water to occur for use of synthetic air as an oxidant as the synthetic air can be fed to the combustion device 137 at lower overall flow rates as compared to air or oxygen enriched air since there is substantially less N2 that can be present in the synthetic air. For example, in a conventional arrangement that may utilize air or oxygen enriched air as the oxidant, that conventional arrangement may utilize boiler feed water for warming the oxidant and cooling the boiler feed water to a desired temperature. After retrofitting to utilize an embodiment of our apparatus in which synthetic air can be utilized, the boiler feed water may be too hot when exiting the oxidant pre-heater (e.g. less synthetic air may be used as compared to air or oxygen enriched air and/or the synthetic air may be hotter as compared to air, so a smaller cooling duty may act on the boiler feed water). Use of an additional boiler feed water cooling device (e.g. boiler feed water cooling device 505) can help provide an effective control of boiler feed water temperature for such configurations in a way that also provides improved operational performance for use of synthetic air as the oxidant and can help avoid incurring substantial work associated with rerouting pre-existing water circuit conduits for the boiler feed water in more substantial ways for the retrofit of a pre-existing conventional steam reformer or steam-methane reformer (SMR). The boiler feed water cooling device 505 can be positioned and configured to help provide an output of boiler feed water that is at a pre-selected temperature within a pre-selected boiler feed water temperature range.

Also, the optional utilization of carbon capture unit 114 in the hydrogen production system 5 can provide additional process flexibility and improved CO2 recovery. For example, at during start up and shutdown operations, the utilization of the carbon capture unit 114 to recover CO2 can help provide higher CO2 content streams for use in forming the oxidant so that combustion device 137 can utilize a low N2 oxidant for a longer period of time as the recovered CO2 can be fed to the mixing device 128 for forming the oxidant as discussed above when additional CO2 may be desired for mixing with the oxidant. Also, the utilization of the carbon capture unit 114 can permit improved CO2 recovery to be provided when such CO2 is not needed for forming the oxidant in some operational cycles as discussed above.

In some embodiments, utilization of the carbon capture unit 114 can help provide a recovery of 50% to 60% of CO2 produced during operation of the reformer apparatus 2. Once the reformer apparatus 2 is operating with synthesis gas having low N2 to produce a high CO2 content flue gas, the CO2 recovery can be improved via operation of the carbon capture system 4 to provide a recovery of at least 90% of the CO2 (e.g. between 90% and 100% of the formed CO2, greater than 95% of the formed CO2 and less than 100% of the formed CO2, etc.) in some embodiments.

Also, the carbon capture unit 114 can provide additional enhanced temperature control for the oxidant and/or operation of the combustion device 137. For instance, the CO2-rich CO2 recovery stream 115 output from the carbon capture unit 114 can be at another temperature that can be used for controlling the temperature of the oxidant when a portion of this fluid is fed to the mixing device for use in forming the oxidant and/or the temperature within the combustion chamber when the fluid is mixed with tail gas stream 119 for being fed to the combustion chamber of the combustion device 137.

We have found that use of synthetic air as an oxidant can surprisingly provide low NOx concentrations in the flue gas when the nitrogen concentration is kept relatively low. For example, the N2 concentration in the formed synthetic air that can be used as the oxidant via mixing device 128 can be minimized or otherwise kept relatively low (e.g. below 20 mol% or below 15 mol%). However, N2 may ingress into a combustion chamber of the combustion device 137 due to imperfect seals and/or exposure of the combustion chamber to atmospheric air that may occur due to other non-perfect sealed conditions over time. This can be a particular issue in the event the flue gas 014 used for formation of the synthetic air is flue gas that is formed from the combustion in the combustion chamber and recycled as the mixing device portion for use in forming the synthetic air oxidant. In such a situation, while the N2 concentration for the formed synthetic air oxidant can initially be about 0 mol% or between 10 mol% and 0 mol% or between 5 mol% and 0 mol%, the N2 concentration within the synthetic air may increase over time to a higher concentration (e.g. between 5 mol% N2 and 15 mol% N2, between 5 mol% N2 and 20 mol% N2, or between 5 mol% and 25 mol%).

In other situations (e.g. a newer combustion device facility), seals and other potential sites of ambient air ingress may not be a significant issue. In such a situation, the formed synthetic air oxidant can be maintained so that the N2 concentration of the synthetic air oxidant is under 20 mol%, preferably under 12 mol%, and most preferably between 10 mol% and 0 mol%.

In some embodiments, it is contemplated that the synthetic air oxidant that is formed via the mixing device 128 can have 0 mol% N2 or only a trace amount of N2 (e.g. between 0 mol% N2 and 1 mol% N2). However, it is contemplated that most embodiments employed in industrial settings can be configured to utilize synthetic air as an oxidant for steam reforming applications that have an N2 content in the range of 3 mol% and 20 mol% to account for various different design criteria.

We have found that the use of synthetic air as the oxidant in the combustion chamber of the combustion device 137 can facilitate low NOx formation during combustion of a fuel. Use of the synthetic air oxidant having low N2 concentrations can help avoid the presence of nitrogen for formation of NOx. Further, the synthetic air can include relatively high concentrations of CO2 and water, which can help further inhibit NOx formation. We surprisingly found that embodiments of the reformer apparatus 2 that utilize synthetic air was the oxidant that has such low N2 concentrations and relatively high water and CO2 concentrations can provide a substantial reduction of NOx formation (e.g. provide between a 75% and 95% reduction in NOx formation as compared to use of air as the oxidant or oxygen enriched air as the oxidant (e.g. oxidant flows having between 70 mol% N2 and 79 mol% N2 and between 20 mol% O2 and 28 mol% O2) in some embodiments). This has surprisingly been found to be the case even in situations where there is a presence of N2 at a relatively low level, which can be much lower than that in ambient air, but still be in sufficient amount for an O2-enriched atmosphere to expect high NOx emissions near the flame where temperature may increase as compared to atmospheric combustions.

Utilization of synthetic air as the oxidant via mixing device 128 and the merging of recycled flue gas, one or more stream of fluid from one or more carbon capture devices (e.g. carbon capture unit 114 and/or a permeate stream output from the membrane unit 220 of the carbon capture system 4 that can be the oxidant forming feed stream 225 from the carbon capture system 4) and oxygen from a source of oxygen 130 can be controlled and/or monitored by use of a control system that can utilize a pre-defined control process. Such a control system can include at least one controller communicatively connected to at least one sensor and one or more flow control mechanisms (e.g. dampers, valves, etc.). The at least one controller can also be connected to one or more fluid drive mechanisms (fans, boosters, compressors, etc.) that can be utilized to increase a flow rate of fluid and/or pressure of the fluid as the fluid passes to the mixing device 128 for forming the oxidant. The at least one controller can also be connected to other sensors, controllers, detectors, analyzers, flow control mechanisms, and/or fluid drive mechanisms to monitor and/or control operation of the combustion device 137 for combustion of fuel, hydrogen production system 5 for production of hydrogen and/or carbon capture system 4 for CO2 recovery or related steam reforming processing.

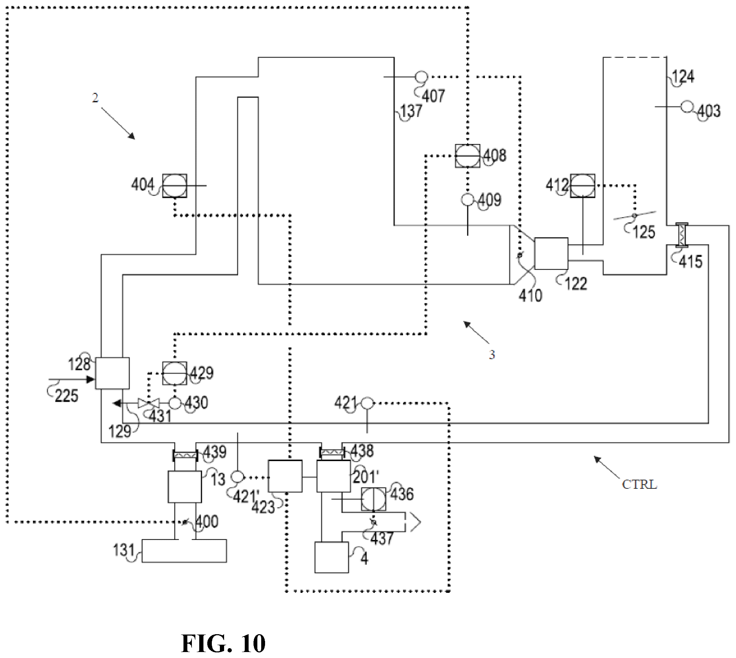

Figures 10-12 illustrate different exemplary embodiments of control systems CTRL that can be utilized in embodiments of the apparatus for steam reforming 1 that can include a reformer apparatus 2 and/or embodiments of our reformer apparatus 2 having a combustion system 3, carbon capture system 4, and hydrogen production system 5. These example control systems CTRL can be utilized in embodiments of the plant 1 and/or reformer apparatus 2 discussed above and shown in Figures 1-8, for example.

Figure 10 illustrates a first exemplary control system CTRL that can include an oxygen analyzer 408 configured to measure the concentration of O2 in the flue gas 014 exiting the combustion chamber via sensor 409 positioned upstream of stack 124 and upstream of the induced draft fan unit 122 that can be positioned adjacent a stack 124 and in fluid communication with the stack 124 and/or flue gas output conduit 123. For example, the sensor 409 can be positioned near an exit of the radiant box.

The oxygen analyzer 408 can be configured to utilize the data from the sensor 409 for determining the oxygen concentration in the flue gas 014 and uses that data to control a position of the damper 400 to control a flow of gas passed across a fan 13 (e.g. a forced draft fan) within a conduit upstream of the mixing device 128 or downstream of the mixing device 128 for feeding oxidant to the combustion chamber of the combustion device 137. Adjustment of the damper 400 position can help dictate flow of oxidant fed to the combustion device 137(e.g. affect a flow rate of oxidant that can be driven by a forced draft fan 13). The damper 400 can be upstream or downstream of the mixing device 128 and the fan 13 can be upstream or downstream of the mixing device 128 as well.

An isolation device 439 (e.g. a shut-off device or an on/off valve, etc.) can be positioned to help isolate fan 13 and/or adjust flow of fluid fed to the mixing device 128 for isolating at least one source of gas 131 from the mixing device 128 (e.g. the isolation device 439 can be adjusted from an open position to a closed position to prevent gas from a source of gas 131, such as air or a CO2-rich flue gas, from being fed to the mixing device 128 or adjusted to an open position to permit feeding of such gas to the mixing device 128). The isolation device 439 can be positioned and configured to isolate fan 13 and/or the source of gas 131 prevent flue gas leaking out via the fan 13 and/or the source of gas 131. For instance, when the source of gas 131 is air or is a CO2-rich flue gas, the isolation device 439 can be configured to close to prevent any fluid to be fed to the mixing device leaking from mixing device 128 to the source of gas 131 (e.g. atmosphere) after operations has adjusted so the operation occurs via use of synthetic air formed via recycled flue gas and oxygen from a source of oxygen. During startup operations when air or other source of gas may be initially used to form the oxidant, the isolation device 439 can be in an open position and the fan 13 can be run to help feed fluid to the mixing device 128 for forming the oxidant.

An isolation device 415 and/or isolation device 438 can also be positioned for isolation of the mixing device 128 from one or more other fluids. For example, isolation device 415 can be adjusted from an open position to a closed position to prevent flue gas from passing toward the carbon capture system 4 and/or mixing device 128. As yet another example, an isolation device 438 can be positioned for adjustment from an open position to a closed position to prevent a carbon capture system portion of the flue gas to be fed to the carbon capture system 4. Isolation devices 415 and 438 can be utilized and adjusted between their open positions and closed positioned to facilitate venting operations or other fluid flow control operations.

The control system CTRL can also include a pressure sensor 407 that can be positioned in the combustion chamber of the combustion device 137 (e.g. its radiant section or its convection section) to measure pressure. The pressure sensor 407 can be communicatively connected to a damper 410 positioned adjacent the flue gas output conduit 123 and/or stack 124 so the pressure data can be used to adjust the position of the damper 410 to help dictate a flow rate of the flue gas that can be fed to the inducted draft fan 122. The use of the pressure sensor 407 and oxygen analyzer 409 can be utilized at a startup of the reformer apparatus 2 to help smoothly start up the apparatus for steam reforming 1. After startup, these elements may be utilized in conjunction with other elements of the control system CTRL.

In some embodiments, such as a new plant design embodiment, the oxygen analyzer 408 can be adjusted in its use when synthetic air oxidant is being utilized as the oxidant for combustion. This can occur after start-up in embodiments where air or oxygen enriched air may be used as the oxidant for startup operations. This switchover can occur after startup and after sufficient CO2 has built up in the flue gas 014 to provide a CO2-rich flue gas 014 that can be used as the mixing portion for feeding to the mixing device 128 to form an oxidant that can have a relatively low level of nitrogen, for example. The oxygen analyzer 408 can measure the concentration of oxygen in the flue gas 014 to be output from the combustion device 137 via sensor data from sensor 409 and provide control data to a flow controlling mechanism controller 429 of a flow control mechanism 431 connected to the oxygen feed conduit through which the feed of oxygen 129 from the source of oxygen 130 passes. The flow control mechanism 431 can be a valve or damper or multiple valves or dampers used in combination, for example, that can be adjusted via the flow control mechanism controller 429, which can adjust the position of the flow control mechanism 431 based on the control data or other data provided by the oxygen analyzer 408. The adjustment of the flow control mechanism 431 can adjust a flow rate at which the oxygen from the source of oxygen (e.g. feed of oxygen 129) is fed to the mixing device 128 for forming the oxidant. The flow rate at which the oxygen from the source of oxygen (e.g. feed of oxygen 129) is passed to the mixing device 128 can also be monitored via oxygen flow sensor 430, which can be positioned in the oxygen feed conduit through which the feed of oxygen 129 can pass to measure the flow rate of the feed of oxygen. The oxygen flow sensor 430 can be communicatively connected to the flow control mechanism controller 429 to provide data identifying the oxygen flow rate to the flow control mechanism controller 429 to facilitate the flow control mechanism controller's determination of how to adjust the flow control mechanism 431.

For example, the flow control mechanism controller 429 can respond to oxygen content data from the oxygen analyzer 408 that indicates oxygen within the flue gas 014 is above a pre-selected value (e.g. at or above a pre-selected high O2 content threshold) to adjust the position of the flow control mechanism 431 to lower the rate at which the feed of oxygen 129 is fed to the mixing device 128 to lower the overall oxygen content within the oxidant so the flue gas 014 can have a lower oxygen concentration more in-line with a pre-selected set of design criteria. As another example, the flow control mechanism controller 429 can respond to oxygen content data from the oxygen analyzer 408 that indicates oxygen within the flue gas 014 is below a pre-selected value (e.g. at or below a pre-selected low O2 content threshold) to adjust the position of the flow control mechanism 431 to increase the rate at which the feed of oxygen 129 is fed to the mixing device 128 to increase the overall oxygen content within the oxidant so the flue gas 014 can have a higher oxygen concentration more in-line with a pre-selected set of design criteria.

In embodiments that can utilize a booster 201' (e.g. a booster fan) that can help drive a flow of flue gas through the carbon capture system 4, the speed control for this booster 201' (e.g. booster fan speed control) can affect the flow rate of the oxidant forming feed stream 225 output from the membrane unit 220 of the carbon capture system 4 fed to the mixing device 128 for forming the oxidant. The booster 201' can be controlled based on a booster controller 423 receiving flow rate data from a first flue gas flow rate sensor 421 positioned upstream of the booster 201' and before the second portion 203 of the flue gas is split from the first portion 204 of the flue gas (e.g. at location A as discussed above in embodiments that utilize such a split). The first flue gas flow rate sensor 421 can provide data to the booster controller 423 via a communication connection between these elements. This data can identify the flue gas flow rate output from the combustion device 137 via the flue gas output conduit 123. For example, this data can include flow rate measurement data and/or pressure measurement data that can be utilized to determine a flow rate of the flue gas.

The booster controller 423 can also receive data from a second flue gas flow rate sensor 421' positioned to measure the flow rate of the second portion 203 of flue gas after it is split from the first portion 204. The data from the second flue gas flow rate sensor 421' can be provided to the booster controller via a communicative connection between these elements. This data can include flow rate measurement data and/or pressure measurement data that can be utilized to determine a flow rate of the flue gas, for example. The booster controller 423 can utilize this data to determine the difference between total flue gas flow and the flow of the first portion 204 of flue gas passed across the booster 201' so that the speed of the booster 201' is adjusted to account for the mass flow of carbon capture portion of the flue gas being fed to the carbon capture system 4 for CO2 recovery via the cold partial condensation unit 214. The booster controller 423 can also be communicatively connected to an oxygen analyzer 404 positioned to detect oxygen content within the oxidant being fed to the combustion device 137 (e.g. positioned in an oxidant feed conduit through which oxidant feed stream 136 passes or positioned in an oxidant inlet of the combustion device through which the oxidant feed stream passes into the combustion device). The booster controller 423 can also control the speed of booster 201' to help ensure the oxygen level within the oxidant formed via the mixing device 128 is within a pre-selected range as the speed of the booster 201' can affect the flow rate of the oxidant forming feed stream 225 output from the carbon capture system 4 fed to the mixing device 128 for forming the oxidant (e.g. output from the membrane unit 220, etc.).

For example, if the oxygen level is considered to be too low based on data from the oxygen analyzer 404 (e.g. at or below a pre-selected low O2 content threshold for the oxidant being fed to the combustion device 137), the speed of the booster 201' can be increased by the booster controller 423 based on the difference between the flow rates of the flue gas provided by the first and second flue gas flow rate sensors 421 and 421' and the extent to which the oxygen level is determined to be below a desired level. As another example, in a situation where the oxygen level is considered to be too high based on data from the oxygen analyzer 404 (e.g. at or above a pre-selected high O2 content threshold for the oxidant being fed to the combustion device 137), the speed of the booster 201' can be decreased by the booster controller 423 based on the difference between the flow rates of the flue gas that can be determined based on the data from the first and second flue gas flow rate sensors 421 and 421' and the extent to which the oxygen level is determined to be above a desired level. In addition to booster speed, a position of a damper or other operational parameter can be adjusted to facilitate the adjustment in flow rates of the flue gas via the booster controller 423 or other controller as well.

A pressure controller 412 can be communicatively connected to a pressure sensor to detect a pressure of the flue gas 014 in the stack 124 and control a position of vent damper 125. As noted above, vent damper 125 can be maintained in a closed position for normal operation. However, if a high pressure condition is detected, the pressure controller can determine that this condition exists to communicate with vent damper 125 to adjust its position to an open position for venting. For example, if pressure data from the pressure sensor monitoring the pressure of the flue gas in the stack 124 meets or exceeds a pre-selected vent pressure threshold, the controller can communicate with the vent damper 125 to open the vent damper 125 for venting of flue gas to reduce the pressure and avoid a possible safety hazard.

Venting can also be provided for flue gas output from the combustion device via the flue gas output conduit 123 for being fed to the carbon capture system 4 and/or toward the mixing device 128. For example, a pressure controller 436 can be positioned in the flue gas outlet conduit 123 for monitoring pressure of the flue gas in this conduit and controlling the position of a flue gas venting conduit damper 437 from a closed position to an open position in response to determining that the pressure of the flue gas meets or exceeds a pre-selected vent pressure threshold (e.g. a pre-selected venting pressure). The pressure controller 436 can be communicatively connected to the damper 437 for actuating adjustment of the damper's position. The flue gas venting conduit damper 437 can otherwise be maintained in a closed position to avoid venting of flue gas being passed to the carbon capture system 4 and/or mixing device 128.

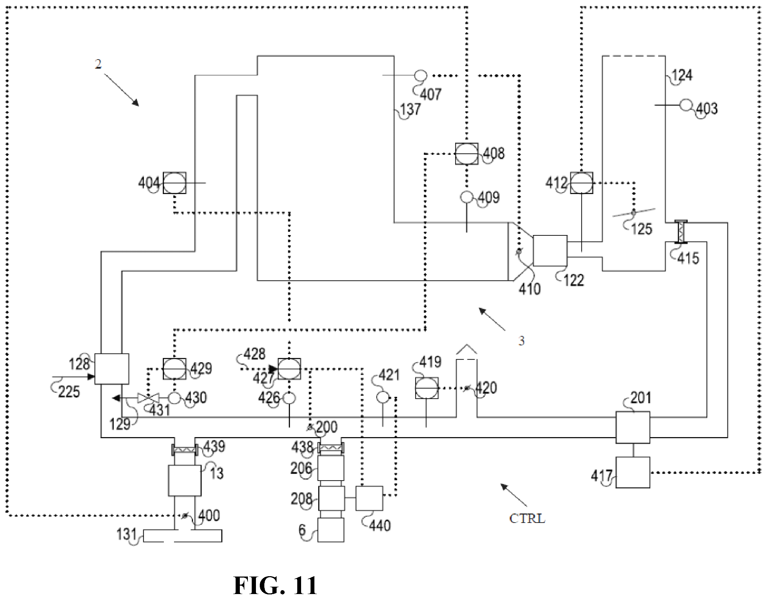

Figure 11 illustrates an exemplary embodiment of a control system CTRL that can be adapted for an embodiment of the apparatus for reforming that can be formed via a retrofit operation to adjust features of a pre-existing steam reforming system to create an embodiment of our apparatus for steam reforming 1. Of course, it is contemplated that such an embodiment can also be utilized in a newly construed apparatus for steam reforming as well in some situations.

Startup operations can be controlled for the embodiment of the control system CTRL in the same manner for Figure 11's embodiment as the embodiment of Figure 10 discussed above. However, the control scheme utilized after the switchover to use of synthetic air for forming oxidant via recycled flue gas via the mixing device portion of flue gas, the merging of this recycled flue gas with one or more streams of fluid from one or more carbon capture devices (e.g. carbon capture unit 114 and/or the oxidant forming feed stream 225 that can be output from the carbon capture system 4) and oxygen from a source of oxygen 130 can differ in the embodiment of Figure 11.

For example, a flue gas flow controller 427 can be communicatively connected to a flow rate sensor 426 positioned downstream of a booster 201 and downstream of the flow control mechanism 200. The flow rate sensor 426 can be positioned to detect, measure, and/or identify a flow rate of the mixing device portion of the flue gas that is being fed to the mixing device 128.

The flue gas flow controller 427 can also be communicatively connected to the feed compression system 208 of the carbon capture system 4 to control the suction pressure at which the compressor of the feed compression system 208 operates (e.g., control the compressor rotational speed, etc.). For example, the flue gas flow controller 427 can be communicatively connected to a compressor controller 440 of a compressor of the feed compression system to communicate with the compressor controller 440 to adjust at least one operational parameter of the compressor (e.g. a rotational speed of the compressor, vane angle adjustment of the compressor, and/or other operational parameter of the compressor of the feed compression system 208 for adjustment of a flow rate of flue gas passed to the carbon capture system 4 and/or proportion of the flue gas fed to the carbon capture system 4 as the carbon capture system portion of the flue gas). Adjustment in operation of the feed compression system 208 and/or flow control mechanism 200 (e.g. damper, etc.) can result in changing a flow rate of compressed flue gas fed to the assembly of elements 6 of the carbon capture system 4 that are downstream of the feed compression system 208.

The flue gas flow controller 427 can also be communicatively connected to the flow control mechanism 200 to adjust the position of the flow control mechanism 200 to adjust the split of the flue gas for adjusting a proportion of the flue gas fed to the mixing device 128 as the mixing device portion and the proportion of the flue gas fed to the carbon capture system 4 as the carbon capture portion of the flue gas. For example, the flue gas flow controller 427 can adjust a position of the flow control mechanism 200 (e.g. adjust a position of a damper when the flow control mechanism 200 is a damper) to adjust a proportion of the flue gas fed toward the mixing device 128 as the mixing device portion of the flue gas and a proportion of the flue gas fed to the carbon capture system 4 as the carbon capture system portion of the flue gas. The flue gas flow controller 427 can communicate with the flow control mechanism 200 and/or the feed compression system for adjustment in at least one operational parameter for adjustment of the proportion of flue gas fed to the mixing device and the proportion of the flue gas fed to the carbon capture system 4.

In some embodiments, the flue gas controller 427 can be configured to control operation of the feed compression system 208 of the carbon capture system 4 based on flow rate data received from a first flue gas flow rate sensor 421 positioned upstream of the feed compression system 208 and before the second portion 203 of the flue gas is split from the first portion 204 of the flue gas (e.g. at location A as discussed above in embodiments that utilize such a split). The first flue gas flow rate sensor 421 can provide data to the flue gas controller 427 via a communication connection between these elements. This data can identify the flue gas flow rate output from the combustion device 137 via the flue gas output conduit 123. For example, this data can include flow rate measurement data and/or pressure measurement data that can be utilized to determine a flow rate of the flue gas.

The flue gas controller 427 can also receive data from a second flue gas flow rate sensor 426 positioned to measure the flow rate of the second portion 203 of flue gas after it is split from the first portion 204. For example, this data can include flow rate measurement data and/or pressure measurement data that can be utilized to determine a flow rate of the flue gas. The data from the second flue gas flow rate sensor 426 can be provided to the flue gas controller 427 via a communicative connection between these elements. The flue gas controller 427 can utilize this data to determine the difference between total flue gas flow and the flow of the first portion 204 of flue gas to the feed compression system 208 so that the speed of the compressor of the feed compression system 208, van position of the compressor of the feed compression system, position of the flow control mechanism 200 and/or other operational parameter(s) of the compressor can be adjusted to account for the mass flow of carbon capture portion of the flue gas being fed to the carbon capture system 4 for CO2 recovery via the cold partial condensation unit 214.

The flue gas flow controller 427 can also be connected to the oxygen analyzer 404 for use of oxygen content data of the oxidant for adjusting the position of the flow control mechanism 200 and/or operational parameter of the compressor of the feed compression system 208 of the carbon capture system 4 (e.g. vane position parameter and/or rotational speed parameter, etc.). For instance, if the oxygen level is considered to be too low based on data from the oxygen analyzer 404, the rotational speed of the compressor of the feed compression system 208 can be increased by the flue gas flow controller 427 (e.g. via communications with the compressor controller 440) based on the flow rate detected by the second flow rate sensor 426 and the extent to which the oxygen level is determined to be below a desired level to provide less flue gas to the mixing device 128. Also (or alternatively), the flow control mechanism 200 and/or other compressor operational parameter can be adjusted so that less flue gas is fed to the mixing device 128 as the mixing device portion so a smaller proportion of the flue gas is fed to the mixing device 128 as the mixing device portion and the rate of flue gas being fed to the carbon capture system 4 can also be increased via this adjustment.

As another example, in a situation where the oxygen level is considered to be too high based on data from the oxygen analyzer 404, the rotational speed of the compressor of the feed compression system 208 of the carbon capture system 4 can be decreased by the controller 427 based on the difference between the flow rate of the flue gas determined from the data of the flue gas flow rate sensor 426 and the extent to which the oxygen level is determined to be above a desired level to provide a higher flow rate of flue gas as the mixing device portion of the flue gas to the mixing device 128. Also (or alternatively), the flow control mechanism 200 can be adjusted so that a smaller proportion of the flue gas is fed to the carbon capture system 4 as the carbon capture portion of the flue gas and a higher proportion of the flue gas is fed toward the mixing device 128 as the mixing device portion of the flue gas. In situations where the proportion of flue gas fed to the carbon capture system 4 is to be decreased, the position of the flow control mechanism 200, speed of compressor of the feed compression system 208 can be adjusted to a lower speed, and/or vane angle of the compressor can be adjusted to provide such a flow adjustment, for example. For instance only one of these parameters, only two of these parameters, or all of these parameters can be adjusted to provide the decreased proportion of flue gas being fed to the carbon capture system 4 as the carbon capture portion of the flue gas and an increase in the proportion of the flue gas being fed to the mixing device 128 as the mixing device portion of the flue gas.

In situations where the proportion of the flue gas fed to the carbon capture system 4 is to be increased, only the position of the flow control mechanism 200 or only the speed of compressor of the feed compression system 208 or only a vane position of the compressor can be adjusted based on the pre-defined criteria for flue gas control used by the flue gas flow controller 427. In other situations, an increase in the proportion of flue gas to be fed to the carbon capture system 4 can result in both an increase in the speed of the compressor of the feed compression system 208, adjustment in compressor vane position, and an adjustment of the flow control mechanism 200 to provide a larger proportion of the flue gas as the mixing portion of the flue gas.

It should be appreciated that the increasing of the proportion of the flue gas fed to the carbon capture system 4 can result in an increase in the flow rate of the oxidant forming feed stream 225 being fed to the mixing device 128. This is relatively a small flow of fluid overall and may have a negligible impact. If such an impact is considered to be significant, the impact can be accounted for in the adjustment provided by the flue gas flow controller 427. Also, decreasing the proportion of the flue gas fed to the carbon capture system 4 can result in a decrease in the flow rate of the oxidant forming feed stream 225 being fed to the mixing device 128. To the extent this change in the flow rate of the oxidant forming feed stream 225 is considered to be significant, this impact can also be accounted for in the adjustment provided by the flue gas flow controller 427. Such an evaluation can be based on the pre-defined control criteria set in the flue gas flow controller 427 and/or use of data from a flow rate sensor communicatively connected to the flue gas flow controller 427 (e.g. via communicative connection 428 shown in Figure 11) that can identify a flow rate of the oxidant forming feed stream 225 being fed to the mixing device 128 to the flue gas flow rate controller 427.

The control system CTRL for the embodiment of Figure 11 can also utilize the pressure controller 412 can be communicatively connected to a pressure sensor to detect a pressure of the flue gas 014 in the stack 124 and control a position of vent damper 125. As noted above, vent damper 125 can be maintained in a closed position for normal operation. However, if a high pressure condition is detected, the pressure controller 412 can determine that this condition exists to communicate with vent damper 125 to adjust its position to an open position for venting. For example, if pressure data from the pressure sensor monitoring the pressure of the flue gas in the stack 124 meets or exceeds a pre-selected vent pressure threshold, the controller can communicate with the vent damper 125 to open the vent damper 125 for venting of flue gas to reduce the pressure and avoid a possible safety hazard.

The pressure controller 412 can also be communicatively connected to a booster controller 417 connected to booster 201 to control a speed at which booster 201 can operate (e.g. a speed at which a booster fan or fan can rotate) and/or a position of damper or dampers positioned upstream of the booster 201 (e.g. a damper of the stack 124). Depending on a detected pressure condition for the flue gas 412, the speed of the booster 201 can be increased or decreased and/or the position of the upstream damper(s) can be adjusted. For example, if the pressure of the flue gas in the combustion chamber of the combustion device 137 or the stack 124 is considered to be at a high pressure that is increasing toward a vent pressure (e.g. at a pressure that is above a first pre-selected pressure that is also below a pre-selected vent pressure threshold), the pressure controller 412 can communicate with controller 417 to increase the speed of the booster 201 and/or to further open at least one upstream damper to help alleviate the pressure by helping to extract flue gas from the stack 124 or combustion chamber at a higher rate. As another example, if the pressure of the flue gas in the combustion chamber of the combustion device 137 or the stack 124 is considered to be at a lower pressure that is decreasing at an undesired rate to meet a pre-defined low pressure condition that may be undesired (e.g. at a pressure that is at or below a second pre-selected pressure and/or that pressure of the flue gas is at or trending to a pre-selected low pressure threshold), the pressure controller 412 can communicate with controller 417 to decrease the speed of the booster 201 and/or adjust a position of a damper upstream of booster 201 (e.g. a damper of stack 124) to be more fully closed to allow the pressure to increase by reducing the flow rate at which the flue gas is passed out of the combustion chamber of the combustion device 137.

The control system CTRL of the embodiment of Figure 11 can also be configured to facilitate venting of flue gas that is to be recycled to the mixing device 128 and/or fed to the carbon capture system 4 for CO2 recovery. For instance, a pressure controller 419 can be positioned to receive pressure data from a pressure sensor positioned to detect the pressure of the flue gas output from the combustion device 137 (e.g. flue gas pressure within the flue gas output conduit 123) and determine a pressure of the flue gas being output from the combustion chamber for being fed to the mixing device 128 and/or carbon capture system 4 and adjust a venting damper 420 positioned to facilitate venting of that flue gas from a closed position to an open position in response to a detected high pressure condition.

For example, the venting damper 420 can be maintained in a closed position for normal operation. However, if a high pressure condition is detected, the pressure controller 419 can determine that this condition exists to communicate with venting damper 420 to adjust its position to an open position for venting. For example, if pressure data from the pressure sensor monitoring the pressure of the flue gas in the flue gas output conduit 123 meets or exceeds a pre-selected vent pressure threshold, the controller 419 can communicate with the venting damper 420 to open the damper for venting of flue gas to reduce the pressure and avoid a possible safety hazard.

In some embodiments, the venting damper 420 can be positioned downstream of the booster 201 to be openable in situations that can help maintain a stable pressure downstream of the booster 201 in case of failures or other conditions that would be atypical or unusual.

The control system CTRL for the embodiment of Figure 11 can also utilize some similar control elements and control scheme elements as used in the embodiment of Figure 10. For example, the oxygen analyzer 408 can be positioned to monitor oxygen content within the flue gas 014 and can use that data to facilitate control of oxygen fed to form oxidant. The oxygen analyzer 408 can measure the concentration of oxygen in the flue gas 014 to be output from the combustion device 137 via sensor data from sensor 409 and provide control data to a flow controlling mechanism controller 429 of a flow control mechanism 431 connected to the oxygen feed conduit through which the feed of oxygen 129 from the source of oxygen 130 passes. The flow control mechanism 431 can be adjusted via the flow control mechanism controller 429, which can adjust the position of the flow control mechanism 431 based on the control data or other data provided by the oxygen analyzer 408. The adjustment of the flow control mechanism 431 can adjust a flow rate at which the oxygen from the source of oxygen (e.g. feed of oxygen 129) is fed to the mixing device 128 for forming the oxidant. The flow rate at which the oxygen from the source of oxygen (e.g. feed of oxygen 129) is passed to the mixing device 128 can also be monitored via oxygen flow sensor 430, which can be positioned in the oxygen feed conduit through which the feed of oxygen 129 can pass to measure the flow rate of the feed of oxygen. The oxygen flow sensor 430 can be communicatively connected to the flow control mechanism controller 429 to provide data identifying the oxygen flow rate to the flow control mechanism controller 429 to facilitate the flow control mechanism controller's determination of how to adjust the flow control mechanism 431.

For example, the flow control mechanism controller 429 can respond to oxygen content data from the oxygen analyzer 408 that indicates oxygen within the flue gas 014 is above a pre-selected value to adjust the position of the flow control mechanism 431 to lower the rate at which the feed of oxygen 129 is fed to the mixing device 128 to lower the overall oxygen content within the oxidant so the flue gas 014 can have a lower oxygen concentration more in-line with a pre-selected set of design criteria. As another example, the flow control mechanism controller 429 can respond to oxygen content data from the oxygen analyzer 408 that indicates oxygen within the flue gas 014 is below a pre-selected value to adjust the position of the flow control mechanism 431 to increase the rate at which the feed of oxygen 129 is fed to the mixing device 128 to increase the overall oxygen content within the oxidant so the flue gas 014 can have a higher oxygen concentration more in-line with a pre-selected set of design criteria.

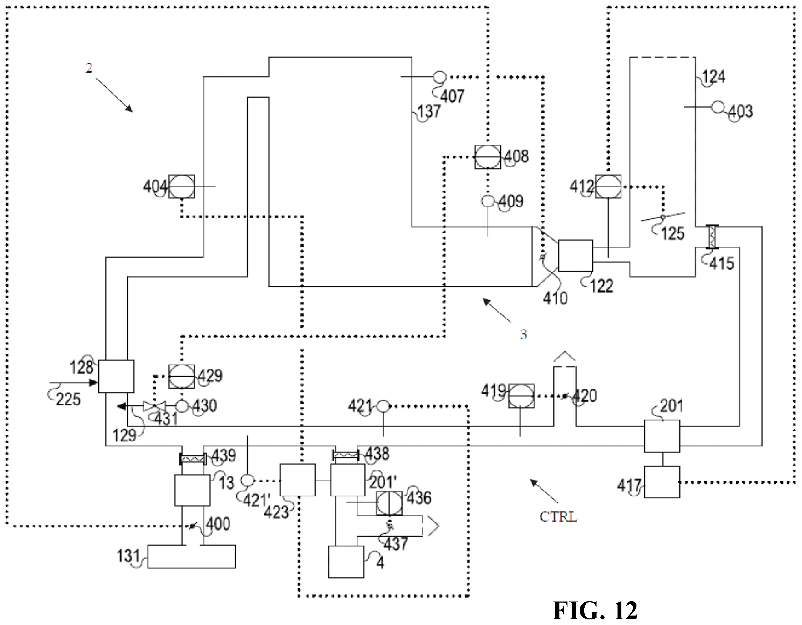

Figure 12 illustrates yet another exemplary embodiment of a control system CTRL, which can be configured for utilization in a retrofit situation. The embodiment of Figure 12 can be arranged to implement a control scheme that can be considered another option of the embodiments of Figures 10 and 11 discussed above, for example. Of course, it is contemplated that other embodiments of the control system CTRL of the embodiment of Figure 12 can be utilized in new plant design embodiments as well.

As may be appreciated from Figure 12, this embodiment of the control system CTRL can utilize control scheme elements discussed above for the embodiments of Figures 10 and 11. For example, the startup control scheme for the embodiment of Figure 12 can be the same as that used in the embodiments of Figures 10 and 11 discussed above.

As another example, the oxygen analyzer 408 can be positioned to monitor oxygen content within the flue gas 014 and can use that data to facilitate control of oxygen fed to form oxidant. The oxygen analyzer 408 can measure the concentration of oxygen in the flue gas 014 to be output from the combustion device 137 via sensor data from sensor 409 and provide control data to a flow controlling mechanism controller 429 of a flow control mechanism 431 connected to the oxygen feed conduit through which the feed of oxygen 129 from the source of oxygen 130 passes. The flow control mechanism 431 can be adjusted via the flow control mechanism controller 429, which can adjust the position of the flow control mechanism 431 based on the control data or other data provided by the oxygen analyzer 408. The adjustment of the flow control mechanism 431 can adjust a flow rate at which the oxygen from the source of oxygen (e.g. feed of oxygen 129) is fed to the mixing device 128 for forming the oxidant. The flow rate at which the oxygen from the source of oxygen (e.g. feed of oxygen 129) is passed to the mixing device 128 can also be monitored via oxygen flow sensor 430, which can be positioned in the oxygen feed conduit through which the feed of oxygen 129 can pass to measure the flow rate of the feed of oxygen. The oxygen flow sensor 430 can be communicatively connected to the flow control mechanism controller 429 to provide data identifying the oxygen flow rate to the flow control mechanism controller 429 to facilitate the flow control mechanism controller's determination of how to adjust the flow control mechanism 431.

For example, the flow control mechanism controller 429 can respond to oxygen content data from the oxygen analyzer 408 that indicates oxygen within the flue gas 014 is above a pre-selected value to adjust the position of the flow control mechanism 431 to lower the rate at which the feed of oxygen 129 is fed to the mixing device 128 to lower the overall oxygen content within the oxidant so the flue gas 014 can have a lower oxygen concentration more in-line with a pre-selected set of design criteria. As another example, the flow control mechanism controller 429 can respond to oxygen content data from the oxygen analyzer 408 that indicates oxygen within the flue gas 014 is below a pre-selected value to adjust the position of the flow control mechanism 431 to increase the rate at which the feed of oxygen 129 is fed to the mixing device 128 to increase the overall oxygen content within the oxidant so the flue gas 014 can have a higher oxygen concentration more in-line with a pre-selected set of design criteria.

Also, booster 201' can be controlled based on a booster controller 423 receiving flow rate data from a first flue gas flow rate sensor 421 positioned upstream of the booster 201' and before the second portion 203 of the flue gas is split from the first portion 204 of the flue gas (e.g. at location A as discussed above in embodiments that utilize such a split). The first flue gas flow rate sensor 421 can provide data to the booster controller 423 via a communication connection between these elements. This data can identify the flue gas flow rate output from the combustion device 137 via the flue gas output conduit 123 (e.g. the data can include flow rate data or pressure measurement data that can be utilized to identify the flue gas flow rate).

The booster controller 423 can also receive data from a second flue gas flow rate sensor 421' positioned to measure the flow rate of the second portion 203 of flue gas after it is split from the first portion 204. This data can include flow rate data or pressure measurement data that can be utilized to identify the flue gas flow rate, for example. The data from the second flue gas flow rate sensor 421' can be provided to the booster controller via a communicative connection between these elements. The booster controller 423 can utilize this data to determine the difference between total flue gas flow and the flow of the first portion 204 of flue gas passed across the booster 201' so that the speed of the booster 201' is adjusted to account for the mass flow of carbon capture portion of the flue gas being fed to the carbon capture system 4 for CO2 recovery via the cold partial condensation unit 214. The booster controller 423 can also be communicatively connected to an oxygen analyzer 404 positioned to detect oxygen content within the oxidant being fed to the combustion device 137 (e.g. positioned in an oxidant feed conduit through which oxidant feed stream 136 passes or an oxidant inlet of the combustion device). The booster controller 423 can also control the speed of booster 201' to help ensure the oxygen level within the oxidant formed via the mixing device 128 is within a pre-selected range (e.g. between a pre-selected low O2 content threshold for the oxidant and a pre-selected high O2 content threshold for the oxidant) as the speed of the booster 201' can affect the flow rate of the oxidant forming feed stream 225 output from the carbon capture system 4 fed to the mixing device 128 for forming the oxidant.

For example, if the oxygen level is considered to be too low based on data from the oxygen analyzer 404, the speed of the booster 201' can be increased by the booster controller 423 based on the difference between the flow rates of the flue gas provided by the first and second flue gas flow rate sensors 421 and 421' and the extent to which the oxygen content of the oxidant is determined to be below a desired level to provide a lower flow rate of the flue gas fed to the mixing device 128 as the mixing device portion of the flue gas. As another example, in a situation where the oxygen content of the oxidant is considered to be too high based on data from the oxygen analyzer 404, the speed of the booster 201' can be decreased by the booster controller 423 based on the difference between the flow rates of the flue gas provided by the first and second flue gas flow rate sensors 421 and 421' and the extent to which the oxygen level is determined to be above a desired level to provide a higher flow rate of the flue gas as the mixing device portion of the flue gas that is fed to the mixing device 128.

Venting can also be provided at various different control locations for the embodiment of Figure 12. For instance, a pressure controller 412 can be communicatively connected to a pressure sensor to detect a pressure of the flue gas 014 in the stack 124 and control a position of vent damper 125. As noted above, vent damper 125 can be maintained in a closed position for normal operation. However, if a high pressure condition is detected, the pressure controller can determine that this condition exists to communicate with vent damper 125 to adjust its position to an open position for venting. For example, if pressure data from the pressure sensor monitoring the pressure of the flue gas in the stack 124 meets or exceeds a pre-selected vent pressure threshold, the controller can communicate with the vent damper 125 to open the vent damper 125 for venting of flue gas to reduce the pressure and avoid a possible safety hazard.

Venting can also be provided for flue gas output from the combustion device via the flue gas output conduit 123 for being fed to the carbon capture system 4 and/or toward the mixing device 128. For example, a pressure controller 436 can be positioned in the flue gas outlet conduit 123 for monitoring pressure of the flue gas in this conduit and controlling the position of a flue gas venting conduit damper 437 from a closed position to an open position in response to determining that the pressure of the flue gas meets or exceeds a pre-selected vent pressure threshold for flue gas being routed as the carbon capture portion of the flue gas. The pressure controller 427 can be communicatively connected to the damper 437 for actuating adjustment of the damper's position. The flue gas venting conduit damper 437 can otherwise be maintained in a closed position to avoid venting of flue gas being passed to the carbon capture system 4 and/or mixing device 128.

Also, venting of flue gas that is to be recycled to the mixing device 128 and/or fed to the carbon capture system 4 for CO2 recovery can also be provided at other locations. For instance, a pressure controller 419 can be positioned to receive pressure data from a pressure sensor positioned to detect the pressure of the flue gas output from the combustion device 137 (e.g. flue gas pressure within the flue gas output conduit 123) and determine a pressure of the flue gas being output from the combustion chamber for being fed to the mixing device 128 and/or carbon capture system 4 and adjust a venting damper 420 positioned to facilitate venting of that flue gas from a closed position to an open position in response to a detected high pressure condition.

For example, the venting damper 420 can be maintained in a closed position for normal operation. However, if a high pressure condition is detected, the pressure controller 419 can determine that this condition exists to communicate with venting damper 420 to adjust its position to an open position for venting. For example, if pressure data from the pressure sensor monitoring the pressure of the flue gas in the flue gas output conduit 123 meets or exceeds a pre-selected vent pressure threshold, the controller 419 can communicate with the venting damper 420 to open the damper for venting of flue gas to reduce the pressure and avoid a possible safety hazard.

In some embodiments, the venting damper 420 can be positioned downstream of the booster 201 and upstream of the booster 201' and/or feed compression system 208 of the carbon capture system 4 to be openable in situations that can help maintain a stable pressure downstream of the booster 201 in case of failures or other conditions that would be atypical or unusual.

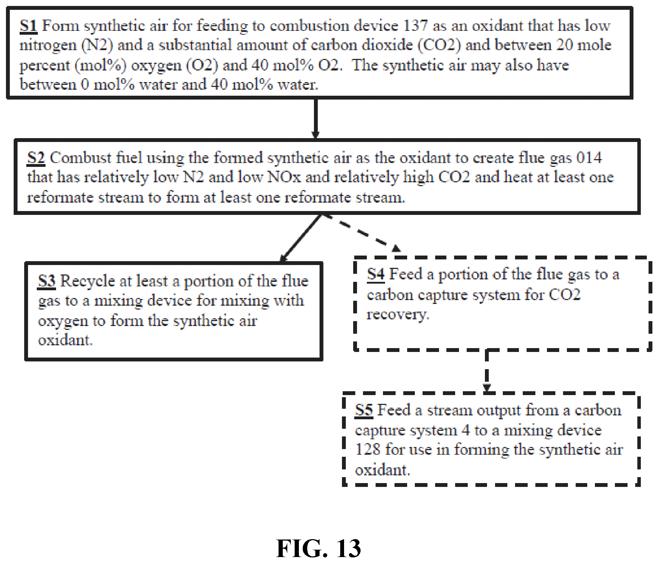

Referring to Figure 13, a first exemplary embodiment of a process for steam reforming is illustrated. Any of the embodiments of the apparatus for steam reforming discussed above can implement an exemplary embodiment of this process.

In a first step S1, synthetic air can be formed as an oxidant for feeding to a combustion device 137 for the combustion of fuel. Examples of oxidant formation that use such a synthetic air are provided above, for instance. The formed synthetic air can include between 20 mol% O2 and 40 mol% O2, between 0 mol% water and 40 mol% water, have a substantial amount of CO2 (e.g. between 20 mol% CO2 and 60-80 mol% CO2, etc.), and a low amount of N2 (e.g. below 20 mol% N2).

In a second step S2, fuel can be combusted in a combustion device 137 using the formed synthetic air as an oxidant for the combustion. The combustion of the fuel can form flue gas 014 that has relatively low N2 and low NOx as well as a high CO2 content. The combustion of the fuel can provide heat for heating at least one reformate stream 102 to form at least one reformate stream 105, which can be fed to a hydrogen production system 5 to form at least one hydrogen product stream.

In a third step S3, a portion of the flue gas can be recycled for use in forming the synthetic air oxidant. For instance, a mixing portion of the flue gas can be fed to a mixing device 128 for forming the synthetic air oxidant as discussed above. Another portion of the flue gas can be fed to a carbon capture system in a fourth step S4 for recovery of CO2 (shown in broken line as an optional step). For instance, a carbon capture portion of the flue gas can be fed to the carbon capture system 4 for CO2 recovery. In a fifth step S5 (shown in broken line as an optional step), a stream output form the carbon capture system 4 can be fed to the mixing device 128 for use in forming the synthetic air oxidant (e.g. formation and use of oxidant forming feed stream 225 output from the carbon capture system 4 as discussed above).

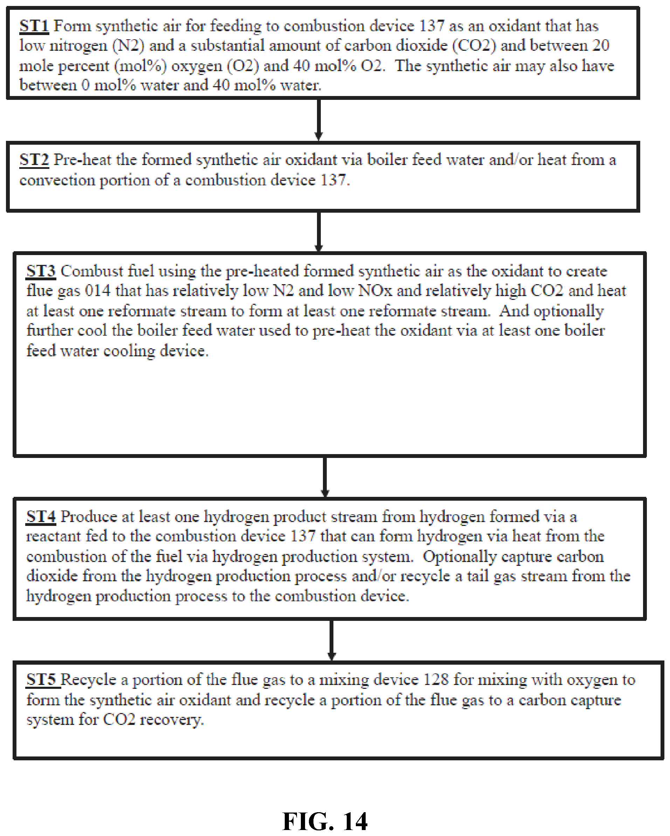

Figure 14 illustrates another embodiment of a process of steam reforming. The exemplary embodiment of the process of Figure 14 includes a first step ST1 of forming a synthetic air oxidant for feeding to the combustion device 137 as the oxidant. In a second step ST2, the formed synthetic air can be pre-heated via boiler feed water and/or heat from a convection portion of the combustion device 137 and subsequently be fed to the combustion chamber of the combustion device 137 for combustion of fuel 137 using the pre-heated synthetic air as the oxidant to create the flue gas 014 that has relatively low N2 and low NOx as well as a relatively high CO2 content in a third step ST3.

Optionally, boiler feed water used to pre-heat the oxidant (and thereby cool the water) can also be fed to at least one boiler feed water cooling device 505. Examples of such a cooling device are provided above, for instance. This can also occur as part of the third step ST3 in some embodiments.

In a fourth step ST4, at least one hydrogen product stream can be produced from the hydrogen formed from the reactant fed to the combustion device 137 (e.g. reformate stream 105), which can form hydrogen via the heat from the combustion of the fuel that occurs in the combustion device 137. Optionally, carbon dioxide can be captured during the hydrogen production process. A tail gas stream from the hydrogen production process can be fed to the combustion device 137. Examples of such process are discussed above.

In a fifth step ST5, a portion of the formed flue gas 014 can be recycled to a mixing device 128 for mixing with oxygen and optionally other gas (e.g. oxidant forming feed stream 225 from the carbon capture system 4 as discussed above, carbon dioxide gas from the CO2 capture unit 114, etc.). Another portion of the flue gas can be fed to a carbon capture system 4 for CO2 recovery.

Embodiment of the processes for steam reforming can also utilize other steps. For example, implementation and use of a control system can be included in embodiments of the process. Examples of control scheme implementation are discussed above in conjunction with Figures 10-12, for instance. As another example, embodiments can also include using CO2 obtained from the CO2 carbon capture unit 114 for recovering CO2, making oxidant and/or feeding to the combustion device 137 with a tail gas stream 119. As yet another example, embodiments can include removing particulates from at least a portion of flue gas before it is feed to a cooler unit 206 and/or after the cooled flue gas is output from the cooler unit 206 (e.g. via particulate removal device 205 and/or particulate removal device 205').

Other process steps can also be utilized in other embodiments as well. Examples of such additional steps can be appreciated from the exemplary embodiments of the apparatus for steam reforming 1 discussed above, for instance.

We have found that the utilization of synthetic air having a low N2 content provides surprising improvements in terms of improved CO2 recovery capabilities as well as low NOx formation from combustion of a hydrocarbon fuel. Below are experimental results obtained from confidential testing that help describe types of surprising results and improvements some embodiment of our apparatus and process can provide.

### EXPERIMENTAL RESULTS

As discussed above, it was surprisingly found that embodiments of the process and apparatus 1 can provide a substantial reduction in NOx formation. Also, embodiments can provide an improved ability to capture CO2 for providing of at least one product stream of CO2 that can have a high CO2 concentration (e.g. greater than 90 mol% CO2, etc. as discussed above).

Confidential testing was performed to evaluate embodiments of our apparatus 1 and process for reduced nitrogen oxide formation during combustion. This testing showed that substantial NOx reductions and improved carbon capture can be provided by embodiments of our apparatus for steam reforming 1 and process for steam reforming.

In conducted testing, an industrial air staged not pre-mixed down fired burner with 1.1 MW duty was fired with a blend of two fuels, natural gas and pressure swing adsorption (PSA) off gas. The composition of the feed of fuel fed to the combustion device for this experiment is shown below in Table 1:

**Table 1; Fuel composition for a first set of testing**

| **Fuel Constituents** | **Concentration (Mol%)** |
|---|---|
| Natural gas | 22 |
| Hydrogen (H2) | 25 |
| CO2 | 51 |
| N2 | 2 |

The fuel composition had a molecular weight of 27.2, a lower heating value (LHV) of 9,107 kJ/kg and a theoretical air requirement of 2.8 on a volume to volume basis (vol/vol) for complete combustion.

Ambient air was utilized as an oxidant for comparison with an embodiment using synthetic air as an oxidant. The ambient air had typical air concentrations (e.g. 20-21 mol% oxygen, 78-79 mol% nitrogen, trace amounts of CO2, water, and Ar, etc.). The synthetic air composition used as the oxidant in the testing is shown in the below Table 2:

**Table 2; Synthetic Air composition for the first set of testing**

| **Synthetic Air Constituents** | **Concentration (Mol%)** |
|---|---|
| CO2 | 35 |
| Ar | 2 |
| O2 | 26 |
| N2 | 8 |
| Water (H2O) | 29 |

In the conducted experimentation, when air was utilized as the oxidant, NOx emissions of 25 parts per million by volume dry (ppmvd) was produced (determined on a dry basis). In contrast, use of the synthetic air provided a 90% reduction in NOx emissions (e.g. 2.5 ppmvd NOx was produced). The NOx reduction was determined on a dry basis.

Additional testing was performed to evaluate different fuel compositions and use of different oxygen compositions in the synthetic air to evaluate how that may affect NOx formation. With oxygen content was adjusted to 22 mol% and 28 mol%, the NOx emissions were found to be 2.8 mg/Nm³ and 2.6 mg/Nm³, respectively, from the combustion of the fuel. As used herein, Nm³ is a normal cubic meter, which is a volume of gas that occupied 1 cubic meter (m³) under conditions in which the gas is absolutely dry, at a temperature of 0° C and at an absolute pressure of 1 atm (which is 1.01325 bar).

In contrast, the use of air with the same fuel resulted in formation of 65.7 mg/Nm³of NOx from the combustion of the fuel. This further shows that use of the synthetic air in embodiments of our process and apparatus can provide a greater than 95% reduction in NOx.

Testing was also conducted to evaluate the impact burner duty could have on NOx emission using synthetic air as the oxidant for the fuel. Our testing found that at 40% burner duty, only 6.1 mg/Nm³of NOx would be formed, which provides about an 80% reduction in NOx as compared to ambient air being used as the oxidant. For other higher duties, it was found that NOx formation would be under 3 mg/Nm³. For example, at a duty of 60%, synthetic air use resulted in NOx formation of 2.6 mg/Nm³and at 80% and 120% duties, the use of synthetic air as the oxidant resulted in NOx formation of 0.8 mg/Nm³. This type of low NOx formation provides a substantial reduction in NOx formation as compared to ambient air (e.g. greater than an 80% reduction to a greater than 95% reduction in NOx). This conducted testing also showed that the use of synthetic air helped provide a reduction in flame length by about 10% as compared to use of ambient air as the oxidant. Our conducted testing also showed that varying oxygen content within the synthetic air from 22 mol% to 28 mol% had no meaningful impact on adiabatic flame temperature or flame length and emissions.

These experimental results were very surprising. In an oxygen enriched atmosphere with a relatively large amount of nitrogen, higher NOx emissions would have been expected near the flame where temperature may increase as compared to atmospheric combustion. While thermal and chemical action of water are known to help inhibit NOx formation, the results of the conducted testing showed that the NOx emissions using synthetic air are substantially and surprisingly reduced and can provide such a substantial reduction along a wide range of N2, CO2, and water compositions within the synthetic air. In fact, NOx emissions can be substantially reduced even without water being present or steam being injected.

Even though N2 in synthetic air can be much lower than that in ambient air, it can still be in a sufficient amount for an O2-enriched atmosphere to expect high NOx emissions near the flame where temperature may increase as compared to atmospheric combustion. However, our experimental results show that even when such N2 is present in the synthetic air (even though that N2 content may be lower than N2 in ambient air or oxygen enriched air), low NOx is obtained via combustion of a fuel with the synthetic air as the oxidant, which is a surprising finding.

Over time, a combustion device 137 in use can result in air ingress into the combustion device 137. This can occur due to seals wearing and other factors. Embodiments of our apparatus and process in which the source of gas having CO2 for the synthetic air is recycled flue gas 014 that is recycled from the combustion device 137 as the mixing device portion of the flue gas may result in the synthetic air having a higher N2 content over time as a result of this condition. While that may occur, it was still surprisingly found that even after a long period of use, the N2 concentration of the synthetic air could be under 20 mol% after a substantial continuous period of operation and still provide a reduction in NOx formation of between 95% and 75% over the duration of operation. And such a reduction in NOx can also be provided with improved carbon capture as discussed above. Further, the reduction in NOx and improved CO2 recovery can be provided without having to incur additional costs or operational risk associated with catalytic reduction (e.g. no need for risking an ammonia slip as discussed above, etc.). The improved reduction in NOx can also be provided irrespective of whether advanced burners are utilized or not in the combustion device 137.

Embodiments of our process, apparatus, and system can be adapted for different design criteria. For example, it should be appreciated that other embodiments can utilize different types of conduit arrangements, fuel storage tanks or fuel pipelines, oxygen storage tanks or oxygen producing process units, combustion device arrangements, and/or types of fuel (e.g. natural gas, oil, etc.,).

It should also be appreciated that other modifications can also be made to meet a particular set of criteria for different embodiments of the apparatus or process. For instance, the arrangement of valves, piping, and other conduit elements (e.g., conduit connection mechanisms, tubing, seals, valves, etc.) for interconnecting different units of the apparatus for fluid communication of the flows of fluid between different elements (e.g., compressors, fans, blowers, dampers, valves, conduits, etc.) can be arranged to meet a particular plant layout design that accounts for available area of the apparatus, sized equipment of the apparatus, and other design considerations. As another example, the flow rate, pressure, and temperature of the fluid passed through the various apparatus or system elements can vary to account for different design configurations and other design criteria.

As yet another example, embodiments of the apparatus and process can each be configured to include process control elements positioned and configured to monitor and control operations (e.g., temperature and pressure sensors, analyzers, flow sensors, an automated process control system having at least one work station that includes a processor, non-transitory memory and at least one transceiver for communications with the sensor elements, valves, dampers, controllers, and a device for providing a user interface for an automated process control system that may be run at the work station and/or another computer device of the plant, etc.). It should be appreciated that embodiments can utilize a distributed control system (DCS) for implementation of one or more processes and/or controlling operations of an apparatus or process as well.

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of the process, apparatus, system, and methods of making and using the same have been shown and described above, it is to be distinctly understood that the invention is not limited thereto but may be otherwise variously embodied and practiced within the scope of the following claims.

## Claims

1. An apparatus (1) for steam reforming comprising:
a combustion device (137) configured to combust a fuel with an oxidant in a combustion chamber of the combustion device (137) to form flue gas and heat at least one reactant stream passed through the combustion device to form at least one reformate stream for production of hydrogen;
a mixing device (128) positioned to receive a mixing device portion of the flue gas from the combustion device (137) to mix with oxygen from at least one source of oxygen (130) to form the oxidant such that the oxidant comprises between 20 mole percent (mol%) oxygen (O2) and 40 mol% O2, between 20 mol% carbon dioxide (CO2) and 80 mol% CO2, between 0 mol% nitrogen (N2) and 25 mol% N2, and between 0 mol% water and 40 mol% water; and
a carbon capture system (4) positioned to receive a carbon capture portion of the flue gas from the combustion device (137) to recover CO2 and form at least one CO2 product stream (218),
wherein the at least one CO2 product stream (218) comprises a first CO2 product stream (218) having a CO2 content of between 90 mol% CO2 and 100 mol% CO2;
wherein the carbon capture system (4) is configured to output a first CO2-rich stream (215) and a second CO2-rich stream (216), the first CO2-rich stream (215) being outputtable at a pressure that is higher than a pressure of the second CO2-rich stream (216); and
wherein the second CO2-rich stream (216) is feedable to a first stage of a CO2 product stream compression system (217) for forming the first CO2 product stream (218) and the first CO2-rich stream (215) is feedable to a second stage of the CO2 product stream compression system (217) for forming the first CO2 product stream (218).

2. The apparatus of claim 1, wherein there is at least one particulate removal device (205) positioned to remove particulates from the carbon capture portion of the flue gas upstream of a feed compression system (208) of the carbon capture system (4).

3. The apparatus of claim 1, wherein the carbon capture portion of the flue gas is a first portion of the flue gas and the mixing device portion of the flue gas comprises a second portion of the flue gas, the mixing device portion of the flue gas being between 30% and 90% of the flue gas and the first portion of the flue gas is a remainder of the flue gas.

4. The apparatus of claim 3, wherein the mixing device (128) and the carbon capture system (4) are positioned such that the second portion of the flue gas is split from the first portion of the flue gas upstream of a cooler unit (206) positioned between a location at which the second portion of the flue gas is split from the first portion of the flue gas and the cooler unit (206); and
wherein the carbon capture system (4) comprises a feed compression system (208) positioned to receive the first portion of the flue gas as the carbon capture portion of the flue gas from the cooler unit (206);
the mixing device (128) is positioned so that a third portion of the flue gas is splittable from the first portion of the flue gas upstream of the feed compression system (208) and downstream of the cooler unit (206) for feeding the third portion of the flue gas to the mixing device (128).

5. The apparatus of claim 4, wherein the mixing device (128) is positioned such that the second portion of the flue gas is mixed with the third portion of the flue gas to form the mixing device portion of the flue gas for feeding to the mixing device (128) to form the oxidant.

6. The apparatus of claim 5, wherein an amount of flue gas within the third portion of the flue gas is adjustable to form the mixing device portion of the flue gas to adjust a temperature of the mixing device portion of the flue gas.

7. The apparatus of claim 1 comprising:
a hydrogen production system (5) positioned to receive the at least one reformate stream to form at least one hydrogen-rich product stream (118);
the hydrogen production system (5) having a carbon capture unit (114) positioned upstream of a hydrogen recovery unit (117), the hydrogen recovery unit (117) configured to form the at least one hydrogen-rich product stream (118);
the carbon capture unit (114) of the hydrogen production system (5) configured to recover CO2 from the at least one reformate stream received by the hydrogen production system (5) and output at least one CO2 recovery stream.

8. The apparatus of claim 7, wherein the carbon capture unit (114) of the hydrogen production system (5) is positioned and configured to output the at least one CO2 recovery stream so that one or more of:
a portion of the at least one CO2 recovery stream is feedable to the mixing device (128) to form the oxidant,
a portion of the at least one CO2 recovery stream is feedable to a compression system (115') to form a CO2 product stream (115d), and/or
a portion of the at least one CO2 recovery stream is feedable to a tail gas stream outputtable from the hydrogen recovery unit (5) for being mixed therewith and fed to the combustion chamber of the combustion device (137).

9. The apparatus of claim 1, wherein the carbon capture system (4) comprises a partial condensation unit (214) positioned to receive compressed flue gas from a compression system (208) of the carbon capture system (4) and output the first CO2-rich stream and the second CO2-rich stream.

10. A process of steam reforming, the process comprising:
forming an oxidant, the oxidant having between 20 mole percent (mol%) oxygen (O2) and 40 mol% O2, between 20 mol% carbon dioxide (CO2) and 80 mol% CO2, between 0 mol% nitrogen (N2) and 25 mol% N2, and between 0 mol% water and 40 mol% water;
combusting a fuel with the oxidant in a combustion device (137) of a steam reformer apparatus (1) to create a flue gas and heat at least one reactant stream to output at least one reformate stream;
sending a mixing device portion of the flue gas to a mixing device (128) to mix the mixing device portion of flue gas with oxygen from at least one source of oxygen to form the oxidant;
sending a carbon capture portion of the flue gas to a carbon capture system (4) to form a first CO2-rich stream and a second CO2-rich stream, the first CO2-rich stream being outputtable at a pressure that is higher than a pressure of the second CO2-rich stream; and
feeding the second CO2-rich stream to a first stage of a CO2 product stream compression system for forming a first CO2 product stream and feeding the first CO2-rich stream to a second stage of the CO2 product stream compression system for forming the first CO2 product stream, the first CO2 product stream having a CO2 content of between 90 mole percent (mol%) CO2 and 100 mol% CO2.

11. The process of claim 10, comprising:
splitting a second portion of the flue gas from a first portion of the flue gas, the mixing device portion of the flue gas comprising the second portion of the flue gas and the carbon capture portion of the flue gas comprising the first portion of the flue gas;
splitting a third portion of the flue gas from the first portion of the flue gas after the first portion of the flue gas is passed through a cooler unit (206) positioned between a location at which the second portion of the flue gas was split from the first portion of the flue gas and a feed compression system (208) of the carbon capture system (4); and
feeding the third portion of the flue gas and the first portion of the flue gas to the mixing device (128) as the mixing device portion of the flue gas for forming the oxidant.

12. The process of claim 11, wherein the feeding of the third portion of the flue gas and the second portion of the flue gas to the mixing device (128) comprises mixing the second portion of the flue gas with the third portion of the flue gas upstream of the mixing device to form the mixing device portion of the flue gas; and
wherein the splitting of the third portion of the flue gas from the first portion of the flue gas is performed to control a temperature of the mixing device portion of the flue gas so that the mixing device portion of the flue gas has a pre-selected temperature within a pre-selected temperature range.

13. The process of claim 10, comprising:
feeding the at least one reformate stream to a hydrogen production system (5) to form at least one hydrogen-rich product stream (118);
treating the at least one reformate stream *via* a carbon capture unit (114) positioned upstream of a hydrogen recovery unit (5) to recover CO2 from the at least one reformate stream received by the hydrogen production system (5) and output at least one CO2 recovery stream; and
one or more of:
feeding a portion of the at least one CO2 recovery stream to the mixing device (128) to form the oxidant,
feeding a portion of the at least one CO2 recovery stream to a compression system (115') to form a CO2 product stream (115d), and/or
feeding a portion of the at least one CO2 recovery stream to a tail gas stream outputtable from the hydrogen recovery unit (5) for being mixed therewith and fed to a combustion chamber of the combustion device (137).
